(19) Europäisches Patentamt
European Patent Office
Office européen des brevets

(11) **EP 3 425 447 B1**

(12) **EUROPÄISCHE PATENTSCHRIFT**

(45) Veröffentlichungstag und Bekanntmachung des Hinweises auf die Patenterteilung:
**11.09.2019 Patentblatt 2019/37**

(51) Int Cl.:
*G02C 13/00* *(2006.01)*    *G06Q 30/06* *(2012.01)*
*G06T 19/20* *(2011.01)*    *G06T 17/00* *(2006.01)*

(21) Anmeldenummer: **17180008.9**

(22) Anmeldetag: **06.07.2017**

(54) **VERFAHREN, VORRICHTUNG UND COMPUTERPROGRAMM ZUM VIRTUELLEN ANPASSEN EINER BRILLENFASSUNG**

METHOD, DEVICE AND COMPUTER PROGRAM FOR VIRTUAL ADAPTING OF A SPECTACLE FRAME

PROCÉDÉ, DISPOSITIF ET PROGRAMME D'ORDINATEUR DESTINÉS À L'ADAPTATION VIRTUELLE D'UNE MONTURE DE LUNETTES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**09.01.2019 Patentblatt 2019/02**

(73) Patentinhaber: **Carl Zeiss Vision International GmbH**
**73430 Aalen (DE)**

(72) Erfinder:
• **Schwarz, Oliver**
 **73492 Rainau (DE)**
• **Breuninger, Tobias**
 **89542 Herbrechtingen (DE)**

(74) Vertreter: **Sticht, Andreas**
 **Kraus & Weisert**
 **Patentanwälte PartGmbB**
 **Thomas-Wimmer-Ring 15**
 **80539 München (DE)**

(56) Entgegenhaltungen:
WO-A1-2013/177456    WO-A1-2016/164859
WO-A2-01/88654    US-A- 5 576 778
US-A1- 2015 243 015    US-A1- 2016 327 811

**Beschreibung**

Die vorliegende Anmeldung betrifft Verfahren, Vorrichtungen und Computerprogramme zum virtuellen Anpassen von Brillenfassungen.

Unter einer Brillenfassung ist dabei in Übereinstimmung mit DIN ESO 77998:2006-01 und DIN ESO 8624:2015-12 ein Gestell oder eine Halterung zu verstehen, mittels dem/der Brillengläser am Kopf getragen werden können. Der Begriff wie hier verwendet beinhaltet insbesondere auch randlose Brillenfassungen. Brillenfassungen werden umgangssprachlich auch als Brillengestelle bezeichnet. Ein virtuelles Aufsetzen einer Brillenfassung bezeichnet im Rahmen der vorliegenden Anmeldung ein Anpassen eines Modells einer Brillenfassung an ein Modell eines Kopfes auf einer Recheneinrichtung, üblicherweise verbunden mit einer graphischen Darstellung des Anpassens der Brillenfassung auf einem Kopf einer Person auf einer Anzeige, beispielsweise einem Computerbildschirm.

Ein virtuelles Aufsetzen einer Brillenfassung auf einem Kopf ist beispielsweise aus der US 2003/0123026 A1 oder der US 2002/015530 A1 bekannt. Bei diesen Druckschriften dient das virtuelle Aufsetzen der Brillenfassung hauptsächlich dazu, einem Benutzer die Auswahl zwischen verschiedenen Brillenfassung zu erleichtern, indem eine graphische Darstellung des Kopfes des Benutzers zusammen mit der Brillenfassung angezeigt wird.

Auch die US 9,286,715 B2 offenbart ein Verfahren zur virtuellen Anprobe einer Brille. Dabei werden sowohl auf einer Brillenfassung als auch auf einem Kopf mehrere Punkte definiert. Eine Positionierung der Brillenfassung am Kopf erfolgt, indem ausgewählte Punkte auf der Brillenfassung mit ausgewählten Punkten auf dem Kopf in Übereinstimmung gebracht werden. Eine Positionsänderung erfolgt durch Ändern der ausgewählten Punkte. Dies ermöglicht eine Positionierung mit einer Genauigkeit, die für den Zweck der US 9,286,715 B2, eine virtuelle Anprobe zur Erlangung eines visuellen Eindrucks bereitzustellen ausreichend ist. In ähnlicher Weise beschreibt die US 2005/162419 A ein virtuelles Aufsetzen einer Brillenfassung mit Hilfe von Merkmalspunkten. Bei dieser Druckschrift wird zunächst eine Fassung skaliert und dann in verschiedene Richtungen positioniert. Schließlich werden Bügel der Brillenfassung um zwei Raumachsen rotiert.

Von dem Unternehmen Volumental ist ein Demonstrationsvideo der Software "Vacker" auf "https://www.volumental.com/face-scanning/", Stand 5. März 2017 verfügbar, bei welcher ein Kopf mit einer aufgesetzten Brille dargestellt ist und Parameter der Brille mittels Schiebereglern modifizierbar sind, beispielsweise des Sitzes der Brille auf dem Nasenrücken oder auch andere Parameter wie Fassungsscheibenwinkel. Auch eine Farbe der Brillenfassung oder eine Farbe der Scharniere der Brillenfassung können ausgewählt werden. Die ausgewählten Parameter werden dann ausgegeben. In diesem Video werden auch verschiedene Parameter eines parametrischen Modells einer Brillenfassung angepasst.

Ein weiteres System zur virtuellen Anpassung einer Brille ist aus der US 2015/0055085 A1 bekannt. Hier wird eine automatische Anpassung der Brille vorgenommen, indem Größe und Sitz der Brille an den Kopf einer Person angepasst wird. Zudem können Form, Stil und Farbe der Brille ausgewählt werden.

Ein Verfahren und eine Vorrichtung zum Konstruieren einer Maßbrille, d.h. eine an einen Kopf einer Person angepasste Brille, ist aus der DE 10 2016 824 A1. Bei diesem Verfahren werden Kopfbilddaten in zwei oder drei Dimensionen aufgenommen, eine Musterbrille ausgewählt und die Musterbrille in Abhängigkeit von Konstruktionsparametern der Musterbrille dargestellt. Die Konstruktionsparameter werden auf Basis der Kopfbilddaten bestimmt.

Die US 2015/0277155 A1 offenbart eine Fassungsindividualisierung einer Brillenfassung, bei der Abstände in einem Gesicht einer Person gemessen werden und die eine Brillenfassung mittels 3D-Druck auf Basis der gemessenen Abstände erstellt wird.

Die US 2013/0088490 A1 offenbart ein iteratives Verfahren zum Anpassen einer Brillenfassung, wobei eine Positionierung der Brillenfassung in kleinen Schritten vorgenommen wird und das Anpassen auf Basis einer Kollisionsdetektion erfolgt, bei der überprüft wird, ob die Brillenfassung mit dem Kopf der Person überlappt.

Die US 2015/0293382 A1 offenbart eine Bestimmung von Parametern für eine virtuelle Brillenanprobe mittels Aufnahme einer Person mit aufgesetzter Beispielfassung. Die Parameter, die mittels dieser Beispielfassung bestimmt wurden, werden für eine virtuelle Anprobe einer virtuellen Fassung entsprechend modifiziert. Da die Person bei der Aufnahme bereits eine Brillenfassung trägt, wird hier kein dreidimensionales Modell des Kopfes ohne Brillenfassung verwendet.

Niswar, Kahn und Farbiz beschreiben in dem Artikel "Virtual Try-On of Eyeglasses using 3D-Model of the Head", Institute for Infocomm Research, Dezember 2011,DOI:10.1145/2087756.2087838 ein Verfahren zur virtuellen Brillenanprobe. Dieses basiert auf vier Referenzpunkten, wobei zwei Punkte auf der Nase und zwei Punkte auf den Ohren liegen. Dabei wird ein 3D-Kopfmodell durch Deformieren eines generischen Kopfmodells basierend auf einigen Merkmalspunkten angepasst.

Die US 2016/0327811 A1 beschreibt ein Verfahren nach dem Oberbegriff des Anspruchs 1. Bei dem Verfahren wird von einem virtuellen Modell einer Fassung ausgegangen. Dieses wird durch Deformation an einen Kopf angepasst. Zur Anpassung der Brillenfassung können dabei Anpassungskriterien vorgenommen werden, beispielsweise eine Maximierung einer Kontaktfläche von Nasenpads zu einer Nase der Person, eine Maximierung einer Kontaktfläche von Brillenbügeln, eine Zentrierung eines Fassungsrandes der Brillenfassung zu den Augen, eine Ausrichtung der Brillenfassung oder eine Minimierung der Kontaktfläche des Fassungsrandes zu den Wangenknochen der Person und zu Augenbrauen der Person.

Als mögliche Erweiterung dieser Kriterien wird eine Festlegung von Zielwerten genannt. Derartige Zielwerte können beispielsweise einen Abstand zwischen den beiden Brillenbügeln der Brillenfassung, eine Vorneigung der Fassung, einen Abstand von Pads der Fassung zueinander, einen Abstand eines Auges zum Fassungsrand, einen Abstand des Fassungsrandes zu Augenbrauen und Wangenknochen, eine Vorneigung der Brillenfassung oder einen Fassungsscheibenwinkel der Brillenfassung betreffen. Diese Parameter und Zielwerte gehen in eine Kostenfunktion ein, und mittels eines herkömmlichen Optimierungsprozesses, beispielsweise einem Levenberg-Marquardt-Algorithmus, wird eine Optimierung vorgenommen. Dann kann die Fassung noch deformiert werden.

Problematisch bei diesem Prozess ist, dass bei einem derartigen Optimierungsprozess nicht unbedingt ein globales Optimum erreicht wird, da mit Optimierungsverfahren wie dem Levenberg-Marquardt-Algorithmus allgemein nur ein lokales Minimum der Kostenfunktion gefunden wird. Bei Oberflächenwelligkeiten von verwendeten 3D-Modellen für Brillenfassungen oder Kopf kann es passieren, dass die Optimierung in einer derartigen Oberflächenwelle fernab des Optimums "steckenbleibt" und somit keine optimale Anpassung erreicht wird.

Zudem ist eine Optimierung mittels eines derartigen Optimierungsverfahrens bei der Verwendung vieler Parameter sehr rechenaufwändig. Dies erschwert die Verwendung von parametrischen Fassungsmodellen, bei welchen eine größere Anzahl von Parametern zu optimieren ist.

Allgemein besteht bei den in dieser Druckschrift beschriebenen Verfahren wie auch bei in den anderen oben genannten Druckschriften beschriebenen Verfahren das Problem, dass Hersteller häufig gewisse Anpassungsrichtlinien für das Anpassen von Brillenfassungen vorgeben, welche vor allem ästhetische Kriterien für den Sitz der Brille definieren, beispielsweise eine Positionierung des Fassungsrandes relativ zu Gesichtsmerkmalen wie Augen oder Augenbrauen. Die Berücksichtigung der jeweiligen Brillenfassung zugeordneter Anpassungsrichtlinien ist bei den oben beschriebenen Herangehensweisen nicht in einfacher Weise möglich. Auf der anderen Seite tragen diese fassungsbezogenen Anpassungsrichtlinien dazu bei, dass ein für die jeweilige Brillenfassung angestrebter Sitz der Brillenfassung an dem Kopf erreicht wird.

Die WO 2016/164859 A1 beschreibt ähnlich wie die US 2016/0327811 A1 ein computerimplementiertes Verfahren zur Anpassung einer "eyewear", insbesondere einer Brillenfassung, an ein 3D-Modell eines Kopfes einer Person. Dabei erfolgt eine Modifizierung von Parametern eines parametrischen Modells der Brillenfassung zur anatomischen Anpassung an einen Kopf nach allgemeinen Kriterien, die für alle Brillenfassungen gelten.

Die WO 2013/177456 A1 und die WO 01/88654 A2 betreffen jeweils die Anpassung eines starren Brillenmodells, das heißt eines nichtparametrischen Modells, an einen Kopf. Dabei können Punkte an einem Brillenbügel festgelegt sein, die zur Anpassung an den Kopf dienen. Die anhand dieser Punkte vorgenommene Positionierung kann anschließend verfeinert werden.

Es ist daher ausgehend von der US 2016/0327811 A1 oder der US 2016/0327811 A1 eine Aufgabe der vorliegenden Erfindung ein Verfahren, eine Vorrichtung und ein Computerprogramm zum virtuellen Anpassen einer Brillenfassung an einen Kopf einer Person bereitzustellen, bei welchem derartige fassungsspezifische Anpassungsrichtlinien, welche eine Brillenfassung insbesondere unter ästhetischen Gesichtspunkten an einen Kopf anpassen, auf einfache Weise berücksichtigt werden können. Zudem soll ein entsprechendes Computerprogramm und eine entsprechende Vorrichtung bereitgestellt werden.

Diese Aufgabe wird gelöst durch ein Verfahren nach Anspruch 1, ein Computerprogramm nach Anspruch 11 sowie eine Vorrichtung nach Anspruch 12. Die Unteransprüche definieren weitere Ausführungsformen.

Erfindungsgemäß wird ein computerimplementiertes Verfahren zur virtuellen Brillenanpassung bereitgestellt, welches ein virtuelles Anpassen eines parametrischen Fassungsmodells einer Brillenfassung an ein 3D-Modell eines Kopfes einer Person umfasst. Das Verfahren ist dadurch gekennzeichnet, dass das virtuelle Anpassen folgende Verfahrensschritte umfasst:

> einen ersten Anpassungsvorgang des parametrischen Fassungsmodells an das 3D-Modell des Kopfes zur Erfüllung von für das parametrische Fassungsmodell spezifischen Anpassungsrichtlinien, wobei die Anpassungsrichtlinien Zielwerte oder Zielbereiche für Abstände zwischen Merkmalen der Brillenfassung und Merkmalen am Kopf angeben, und
> einen zweiten Anpassungsvorgang des parametrischen Fassungsmodells an das 3D-Modell des Kopfes zur anatomischen Anpassung.

Durch die Aufteilung des Anpassens in den ersten Anpassungsvorgang und den zweiten Anpassungsvorgang können spezifische Anpassungsrichtlinien, welche wie oben erläutert von Fassungsherstellern vorgegeben werden können, auf einfache Weise generisch im ersten Anpassungsvorgang berücksichtigt werden. In dem zweiten Anpassungsvorgang kann dann eine verbleibende anatomische Anpassung an die Kopfform vorgenommen werden.

Im Folgenden werden die in dem oben genannten und später beschriebenen Verfahren verwendeten Begriffe noch erläutert:

"Virtuell" ist das Anpassen, weil der Vorgang in einer Recheneinrichtung, beispielsweise einem Personal Computer (PC) geschieht und nicht die reale Brillenfassung auf den realen Kopf gesetzt wird.

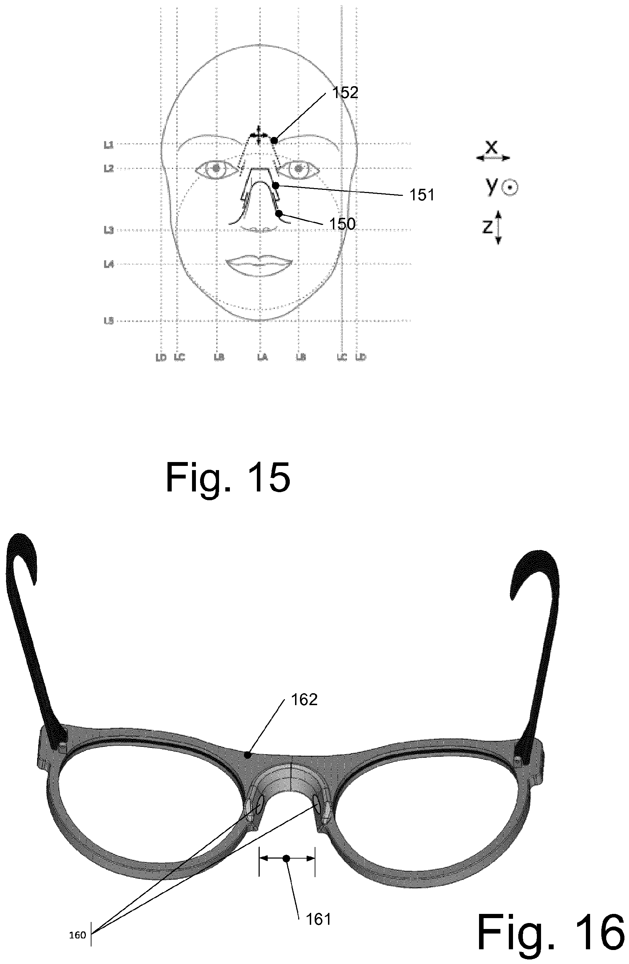

Unter einem Modell, insbesondere 3D-Modell, ist eine dreidimensionale Repräsentation von realen Objekten zu verstehen, die als Datensatz in einem Speichermedium, beispielsweise einem Speicher eines Computers oder einem Datenträger, vorliegen. Eine solche dreidimensionale Repräsentation kann beispielsweise ein 3D-Netz (englisch "3D mesh"), bestehend aus einem Satz von 3D-Punkten, die auch als Vertices bezeichnet werden, und Verbindungen zwischen den Punkten, die auch als Edges bezeichnet werden. Diese Verbindung bilden im einfachsten Fall ein Dreiecksnetz (englisch triangle mesh). Bei einer derartigen Repräsentation als 3D-Netz wird nur die Oberfläche eines Objekts beschrieben, nicht das Volumen. Das Netz muss nicht notwendigerweise geschlossen sein. Wird also beispielsweise der Kopf in Form eines Netzes beschrieben, so erscheint er wie eine Maske. Näheres zu derartigen 3D-Modellen findet sich in Rau J-Y, Yeh P-C. "A Semi-Automatic Image-Based Close Range 3D Modeling Pipeline Using a Multi-Camera Configuration." Sensors (Basel, Switzerland). 2012; 12(8):11271-11293. doi:10.3390/s120811271; insbesondere Seite 11289, Abbildung "Fig.16".)

Eine weitere Möglichkeit der Repräsentation eines 3D-Modells ist ein Voxel-Gitter (englisch "voxel grid"), welches eine volumenhafte Repräsentation darstellt. Dabei wird der Raum in kleine Würfel oder Quader eingeteilt, welche als Voxel bezeichnet werden. Für jedes Voxel wird im einfachsten Fall die An- oder Abwesenheit des darzustellenden Objekts in Form eines Binärwerts (1 oder 0) gespeichert. Bei einer Kantenlänge der Voxel von 1 mm und einem Volumen von 300 mm x 300 mm x 300 mm, was ein typisches Volumen für einen Kopf darstellt, erhält man somit insgesamt 27 Millionen derartiger Voxel. Derartige Voxel-Gitter sind beispielsweise in M. Nießner, M. Zollhöfer, S. Izadi, and M. Stamminger. "Real-time 3D reconstruction at scale using voxel hashing". ACM Trans. Graph. 32, 6, Article 169 (November 2013),. DOI: https://doi.org/10.1145/2508363.2508374 beschrieben.

Das 3D-Modell des Kopfes und/oder das 3D-Modell der Brillenfassung kann insbesondere ein 3D-Modell mit Textur sein. Unter einem 3D-Modell mit Textur versteht man ein 3D-Modell, in dem zusätzlich die Farbinformation der Oberflächenpunkte des realen Objekts enthalten ist. Durch die Verwendung eines 3D-Modells mit Textur ist eine farbrealistische Darstellung des Kopfes und der Brillenfassung möglich.

Dabei kann die Farbinformation direkt in den Vertices als Attribut enthalten sein, zum Beispiel als RGB (Rot Grün Blau)-Farbenwert, oder es wird an jeden Vertex als Attribut ein Paar von Texturkoordinaten gehängt. Diese Koordinaten sind dann als Bildkoordinaten (Pixelpositionen) in einem zusätzlichen Texturbild zu verstehen. Die Textur beispielsweise der oben erwähnten Dreiecke des Dreiecksnetzes wird dann durch Interpolation aus den Pixeln des Texturbildes erzeugt.

Ein Attribut bezeichnet dabei allgemein ein Merkmal, Kennzeichen oder dgl., welches einem Objekt, in diesem Fall einem jeweiligen Vertex, zugeordnet ist (siehe auch Wikipedia-Artikel "Attribut (Objekt)", Stand 5. Juli 2017).

Ein parametrisches Modell ist ein 3D-Modell, welches einen oder mehrere veränderbare Parameter aufweist. Durch Änderung des Parameters oder der Parameter ändert sich dann die Geometrie des durch das 3D-Modell beschriebenen Objekts, in diesem Fall der Brillenfassung, beispielsweise hinsichtlich Größe oder Form. Beispiele für derartige Parameter sind beispielsweise eine Brückenweite oder eine Bügellänge der Brillenfassung, oder auch eine Form eines Fassungsrandes der Brillenfassung. Die Art und Anzahl dieser Parameter sind von der durch das parametrische Fassungsmodell repräsentierten Brillenfassung abhängig. Von einem Hersteller der Brillenfassung können insbesondere Wertebereiche für die Parameter festgelegt sein, welche dann entsprechend fertigbare Brillenfassungen beschreiben. Unter einem freien Fassungsparameter ist ein Parameter des parametrischen Fassungsmodells zu verstehen, welcher in dem Verfahren noch nicht festgelegt wurde, d.h. noch angepasst und bestimmt werden muss.

Anpassungsrichtlinien sind Vorgaben, wie die Brillenfassung relativ zu Bereichen oder Punkten des Kopfes wie Augen, Pupillen, Augenbrauen oder Nase zu positionieren sind. Diese für das parametrische Fassungsmodell spezifischen Anpassungsrichtlinien werden insbesondere dazu benutzt, einen von dem Hersteller der Brillenfassung gewünschten ästhetischen Eindruck sicherzustellen. Die spezifischen Anpassungsrichtlinien können zusammen mit dem parametrischen Fassungsmodell von einem jeweiligen Hersteller in elektronischer Form, beispielsweise als entsprechende Dateien, bereitgestellt sein.

Die anatomische Anpassung betrifft hingegen eine Anpassung, welche einen korrekten bequemen Sitz der Brillenfassung am Kopf sicherstellen soll. Hierzu werden Kriterien verwendet, welche nicht spezifisch für die jeweilige Brillenfassung sind, sondern allgemein für eine Vielzahl von verschiedenen Brillenfassungen gelten. Diese Kriterien können von einem Hersteller einer Vorrichtung, mit denen das oben beschriebene Verfahren ausgeführt wird, vorgegeben werden. Sie können auch von einer Person, die das Verfahren durchführt, beispielsweise einem Optiker, oder auch durch einen Arzt vorgebbar und/oder einstellbar sein. Auch eine Vorgabe derartiger Kriterien durch einen Fassungshersteller oder auch durch mehrere Fassungshersteller gemeinsam ist möglich, wobei sich die Kriterien auch in diesem Fall nicht spezifisch auf eine Fassung beziehen, sondern auf verschiedene Arten von Fassungen anwendbar sind. Beispiele für derartige Kriterien betreffen einen korrekten Sitz der Brillenbügel auf den Ohren oder einen korrekten Sitz von Nasenpads der Brille. Die Anatomische Anpassung kann auch ein Sicherstellen von Mindestabständen zu Bereichen des Kopfes umfassen, z.B. Sicherstellung eines Mindestabstands der Fassungsränder der Brillenfassung zu den Wangenknochen und/oder zu einer Augenbrauen-Partie des Kopfes und/oder eines Mindestabstands zu den Augenwimpern. Ein weiteres Beispiel für eine anatomische Anpassung ist ein Einstellen eines Sollabstandes bzw. eines Sollbereichs für den Abstand zwischen Brillenglas und Auge, also des Hornhaut-Scheitel-Abstands (HSA). Der Hornhautscheitelabstand ist in der Abstand zwischen der Vorderfläche der Hornhaut des Auges und der dem Auge zugewandten Fläche des Brillenglases. Beispielsweise kann bei der anatomischen Anpassung sichergestellt werden, dass ein Soll-Hornhautscheitelabstand von 12 mm oder ein Hornhautscheitelabstand zwischen 12 mm und 17 mm eingehalten wird. Hintergrund ist, dass das Brillenglas nicht zu nah am Auge platziert werden soll um ein Anstoßen der Wimpern zu vermeiden und um Kondensation am Glas zu vermeiden (Schwitzen). Des Weiteren möchten einige Augenoptiker eine Abweichung des Hornhautscheitelabstands von in einem zur Messung der sphärozylindrischen Refraktion verwendeten Phoropter voreingestellten Hornhautscheitelabstand vermeiden. Da ein größerer Hornhautscheitelabstand die optische Wirkung in Richtung positiver Dioptrie-Werte verändert, kann ggfs. bei Weitsichtigkeit, d.h. wenn sog. Plus-Gläser benötigt werden, ein größerer Hornhautscheitelabstand bevorzugt werden. Daher kann ein auf dem Ergebnis der Refraktionsmessung beruhender Soll-Hornhautscheitelabstand vorteilhaft eingesetzt werden. Die Anpassungsrichtlinien liegen dabei bevorzugt in Textform, beispielsweise als .xml- oder JSON-Datei vor, was die Verarbeitung erleichtert.

Die Anpassungsrichtlinien können verschlüsselt sein, beispielsweise mittels eines asymmetrischen Kryptosystems (siehe Wikipedia-Artikel "Asymmetrisches Kryptosystem", Stand 8. Juni 2017, oder "Public-Key-Verschlüsselungsverfahren", Stand 8. Juni 2017) und so durch Signieren gegen unbefugte Änderung geschützt werden und durch Verschlüsselung gegen Lesezugriff durch unbefugte Personen geschützt werden. Dabei kann ein Fassungshersteller die fassungsspezifischen Anpassungsrichtlinien mittels eines öffentlichen Schlüssels des Systemherstellers verschlüsseln und zusätzlich mit Hilfe seines eigenen Schlüssels signieren und somit die Herkunft und Integrität der Anpassungsrichtlinie für den Systemhersteller sichtbar machen. Andererseits kann ein zweiter Fassungshersteller die fassungsspezifischen Richtlinien eines ersten Herstellers nicht einsehen.

Mit "Person" wird im Rahmen der vorliegenden Anmeldung diejenige Person bezeichnet, an deren Kopf letztendlich die Brillenfassung angepasst werden soll. "Benutzer" bezeichnet eine Person, die die Vorrichtung bzw. Das Verfahren zur Brillenanpassung durchführt und bedient. Dies kann die Person selbst sein, kann aber auch jemand anders sein, beispielsweise ein Augenoptiker.

Bevorzugt umfasst das Verfahren weiter eine Konvertierung des parametrischen Fassungsmodells und/oder der Anpassungsrichtlinien in ein vorgegebenes Format. Insbesondere das parametrische Fassungsrandmodell kann von einem Brillenfassungshersteller in verschiedenen Formaten bereitgestellt sein, beispielsweise in proprietären Formaten eines jeweiligen verwendeten CAD (Computer Aided Design)-Programms. Durch die Konvertierung kann eine nachfolgende Verarbeitung, insbesondere der erste und zweite Anpassungsvorgang, für Fassungsmodelle oder Anpassungsrichtlinien verschiedener Hersteller, die ursprünglich in verschiedenen Formaten vorliegen, einheitlich erfolgen.

Bei einem bevorzugten Ausführungsbeispiel weist das parametrische Fassungsmodell mehrere Parameter auf. Ein erster Teil der Parameter wird dann in dem ersten Anpassungsvorgang bestimmt, und ein verbleibender zweiter Teil der Parameter wird in dem zweiten Anpassungsvorgang bestimmt. Hierdurch müssen insbesondere in dem zweiten Anpassungsvorgang der anatomischen Anpassung weniger verbleibende freie Parameter bestimmt werden, was das Auffinden eines Optimums bei der Verwendung herkömmlicher Optimierungsalgorithmen erleichtert.

Derartige Parameter können insbesondere eine Breite der Brillenfassung, eine Brückenweite der Brillenfassung den pantoskopischen Winkel der Brillenfassung (siehe DIN EN ISO 8624:2015-12, Seite 12, A.14)der Brillenfassung, eine Bügellänge von Brillenbügeln der Brillenfassung, eine Position von Nasenpads der Brillenfassung, gegebenenfalls separat für linke und rechte Nasenpads, vertikale und /oder horizontale Anstellwinkel der Nasenpads, gegebenenfalls separat für linke und rechte Nasenpads(wobei der Begriff Nasenpads hier bei Modellen ohne abgesetzte Nasenpads die Nasenauflage, d.h. die Kontaktfläche mit der Nase bezeichnet), einen Radius einer Basiskurve der Fassung und/oder einen Fassungsscheibenwinkel umfassen. Die Basiskurve oder Grundkurve ist in der DIN EN ISO 13666:2013-10 für Brillengläser definiert, siehe dazu DIN EN ISO 13666:2013-10, Seite 58, 11.4.Für Brillenfassungen ist sie nicht explizit in der Norm genannt, siehe dazu aber die Abbildung DIN EN ISO 8624:2015-12, Seite 7, Bild 4 und Seite 9, A.13. Mit der Basiskurve ist der Radius der Durchbiegung der Fassung in der Draufsicht von oben gemeint. Diese Parameter sind teilweise in den eingangs definierten Normen definiert. Durch diese Parameter sind Brillenfassungen gut beschreibbar.

In dem ersten Anpassungsvorgang kann zur Erfüllung der Anpassungsrichtlinien insbesondere die Breite der Fassung entsprechend einer Gesamtskalierung, die Inklination und/oder eine Form des Fassungsrandes, falls dieser vom Hersteller variabel gehalten ist, eingestellt werden. Diese Parameter sind insbesondere auch für die ästhetische Wirkung der am Kopf getragenen Brillenfassung relevant, so dass so ein von dem Brillenhersteller gewünschter ästhetischer Eindruck erzielt werden kann. Andere der oben genannten Parameter, beispielsweise Brückenweite und Bügellänge, können dann im zweiten Anpassungsvorgang eingestellt werden.

Die spezifischen Anpassungsrichtlinien geben Zielwerte oder Zielbereiche (Zielwert, Minimalwert, Maximalwert) für Abstände zwischen Merkmalen der Brillenfassung und Merkmalen am Kopf an. Merkmale der Fassung können dabei physische Merkmale der Fassung wie beispielsweise der Fassungsrand oder Teile davon (oberer Fassungsrand, unterer Fassungsrand) oder auch virtuelle Merkmale, beispielsweise ein Boxmittelpunkt einer Box entsprechend dem in der DIN ESO 13666 definierten Kastensystem, beinhalten, wobei die Box ein den Fassungsrand umschließendes Rechteck in einer Glasebene darstellt. Der Mittelpunkt oder andere Merkmale dieser Box sind ebenfalls Merkmale der Brillenfassung in dem oben genannten Sinne.

Entsprechend können auch die Merkmale des Kopfes physische Merkmale wie beispielsweise Position, Orientierung und Dimension der Nase, Position, Orientierung und Dimension der Augenbrauen, Position des Kinns, Pupillenmittenposition der Augen oder auch Position und Dimension der Augen sein. Es können jedoch auch aus diesen physischen Merkmalen Hilfsmerkmale abgeleitet sein, beispielsweise durch Verknüpfung von mehreren dieser Merkmale durch Berechnungen.

Durch die Verwendung derartiger Merkmale kann der erste Anpassungsvorgang dann einfach automatisiert durchgeführt werden.

Der erste Anpassungsvorgang kann mit Hilfe eines Syntaxbaums, wie er beispielsweise in dem Wikipedia-Artikel "Syntaxbaum" Stand 18. Mai 2017 beschrieben ist, vorgenommen werden. Auf diese Weise ist eine effiziente Anpassung möglich. Unter Syntaxbaum versteht man abstrakt allgemein eine Baumförmige Darstellung einer Ableitung, d.h. eines Vorgangs, wie mittels einer formalen Grammatik Wörter (im Sinne der Informatik wie in obigem Wikipedia-Artikel erläutert) erzeugt wird. Im konkreten Fall des ersten Anpassungsvorgangs geben diese Regeln Hilfsmerkmale, Zielwerte oder Zielbereiche (und Berechnungsvorschriften hierfür) für Merkmale oder Hilfsmerkmale, eine Anpassungsgüte, die angibt, wie weit die spezifischen Anpassungsrichtlinien erfüllt sind (z.B. als gewichtete Quadratsumme der Abweichung von Zielwerten oder Zielbereichen) oder Berechnungsformeln für Fassungsparameter, die in dem ersten Anpassungsvorgang anzupassen sind.

Dabei kann bei dem ersten Anpassungsvorgang eine Abweichung von den Zielwerten oder Zielbereichen als Strafterm in dem Anpassungsvorgang verwendet werden, welcher möglichst klein zu halten ist, entsprechend der Verwendung bei herkömmlichen Optimierungsverfahren. Strafterm bezeichnet also einen Term, der eine Abweichung von den Zielwerten oder Zielbereichen kennzeichnet und durch ein Optimierungsverfahren möglichst klein zu halten ist, was dann einer geringen Abweichung von Zielwerten oder Zielbereichen entspricht.

Ansonsten kann die Abweichung von den Zielwerten innerhalb der Zielbereiche als quadratische Abweichung berücksichtigt werden.

Derartige Verwendungen von Straftermen und Optimierungsverfahren sind in dem Wikipedia-Artikel "Optimierung", dort in dem Kapitel "Methoden der lokalen nichtlinearen Optimierung mit Nebenbedingungen", Stand 18. Mai 2017, beschrieben.

Das parametrische Fassungsmodel und/oder die für das parametrische Fassungsmodell spezifischen Anpassungsrichtlinien können auch in verschlüsselter Form vorliegen, um derartige herstellerspezifische Daten nicht Dritten zugänglich zu machen. Hierfür können herkömmliche Verschlüsselungstechniken, beispielsweise mittels öffentlicher und privater Schlüssel, zum Einsatz kommen. Informationen hierzu finden sich beispielsweise auch in dem Wikipedia-Artikel "Verschlüsselungsverfahren", Stand 18. Mai 2017.

Der erste Anpassungsvorgang kann insbesondere als Optimierungsschleife auf Basis der Merkmale und des Syntaxbaums erfolgen. Eine derartige Optimierungsschleife kann ein virtuelles Aufsetzen der Brillenfassung, eine Termauswertung auf den Syntaxbäumen der Zielwerte und gegebenenfalls einer Zielfunktion umfassen, welche mittels der oben genannten quadratischen Abweichung und gegebenenfalls dem Strafterm berechnet wird. Mittels einer derartigen Optimierungsschleife kann ein allgemeiner Anpassungsvorgang für nahezu beliebige Beschreibungen der Anpassungsrichtlinien erfolgen. In anderen Worten können eine Vielzahl verschiedener Anpassungsrichtlinien mit einer derartigen Herangehensweise abgedeckt werden.

Bei dem virtuellen Aufsetzen kann dabei insbesondere ein Gewicht von Brillengläsern berücksichtigt werden. Das Gewicht der Brillengläser kann beispielsweise ein Einsinken der Brille oder von Nasenpads in die Haut oder ein Abrutschen der Brille auf dem Nasenrücken beeinflussen, siehe J. Eber, "Anatomische Brillenanpassung", Verlag Optische Fachveröffentlichung GmbH, Seite 24 ff. Durch Berücksichtigung des Gewichts der Brillengläser kann ein derartiger Effekt berücksichtigt werden, um die Anpassungsrichtlinien auch bei einem derartigen Einsinken oder Abrutschen zu erfüllen.

Der zweite Anpassungsvorgang kann in für sich genommen bekannter Weise durchgeführt werden, beispielsweise wie in dem eingangs zu den Dokumenten US 2013/0088490 A1 oder US 2015/0293382 A1 erläuterten Stand der Technik beschrieben. Insbesondere können hier Kollisionsbereiche berechnet werden, wie in der eingangs diskutierten US 2016/0327811 A1 beschrieben. Es können auch Verfahren wie in der europäischen Patentanmeldung 17 173 929.5 beschrieben zum Einsatz kommen.

Das Verfahren kann weiter ein Berechnen eines Qualitätsmaßes für das virtuelle Anpassen, d.h. das Ergebnis des ersten und/oder zweiten Anpassungsvorgangs, umfassen. Das Qualitätsmaß gibt dabei an, wie gut die spezifischen Anpassungsrichtlinien und/oder Anforderungen für die anatomische Anpassung erfüllt wurden. Es kann beispielsweise auf Basis von Abstandswerten der angepassten Brillenfassung zu Bereichen des Kopfes der Person, ggfs. gewichtet, berechnet werden. Mittels des Qualitätsmaßes kann der Person und/oder dem Benutzer einen Rückmeldung gegeben werden, wie gut die Anpassung der Brillenfassung ist. Beispielsweise kann so durch Vergleichen des Qualitätsmaßes mit einem Schwellenwert erkannt werden, dass die Anpassung nicht gut genug war, um einen bequemen Sitz der Brillenfassung zu gewährleisten.

Das oben beschriebene Verfahren kann mittels einer Vorrichtung zur virtuellen Brillenanpassung durchgeführt werden, welche einen oder mehrere Prozessoren und eine Anzeige aufweist, wobei auf dem Prozessor oder den Prozessoren ein entsprechendes Computerprogramm mit einem Programcode zur Durchführung des Verfahrens läuft. Das Computerprogramm kann auf einem Speicher der Vorrichtung abgespeichert sein oder auch über eine Cloud bereitgestellt sein. Dabei ist zu beachten, dass die Vorrichtung auch mittels eines verteilten Systems implementiert sein kann, welches verschiedene räumlich getrennte Komponenten aufweist. Beispielsweise kann ein Teil der Anpassungsvorgänge und Berechnungen hierfür auf einem vergleichbar leistungsstarken Rechner, beispielsweise einem externen Server, durchgeführt werden, während die Interaktion mit einem Benutzer auf einem lokalen Rechner erfolgt.

Die Erfindung wird nachfolgend anhand von bevorzugten Ausführungsbeispielen unter Bezugnahme auf die beigefügten Zeichnungen näher erläutert. Es zeigen:

Fig. 1 eine Vorrichtung zur virtuellen Brillenanpassung gemäß einem Ausführungsbeispiel,

Fig. 2 ein Beispiel für eine Implementierung einer Kameraeinrichtung der Fig. 1,

Fig. 3 ein Flussdiagramm, welches eine Übersicht über ein Verfahren zur Brillenanpassung gemäß einem Ausführungsbeispiel gibt,

Fig. 4 ein Flussdiagramm eines Verfahrens gemäß einem Ausführungsbeispiel, welches in dem Verfahren der Fig. 3 einsetzbar ist,

Fig. 5 ein Flussdiagramm eines Verfahrens gemäß einem Ausführungsbeispiel, welches im Rahmen des Verfahrens der Fig. 3 einsetzbar ist,

Fig. 6 eine Ansicht zur Veranschaulichung von Merkmalen eines Kopfes, auf die in Anpassungsrichtlinien Bezug genommen werden kann,

Fig. 7 eine detaillierte Implementierung des Verfahrensschritts 40 der Fig. 4 oder des Schrittes 54 der Fig. 5,

Fig. 8 ein Diagramm zur Erläuterung von Hilfsmerkmalen,

Fig. 9 schematische Ansichten eines Kopfes zur Veranschaulichung einer Anpassung,

Fig. 10 weitere schematische Ansichten eines Kopfes zur Veranschaulichung einer Anpassung auf Basis von Anpassungsrichtlinien,

Fig. 11 ein Flussdiagramm eines Verfahrens gemäß einem Ausführungsbeispiel, welches im Rahmen des Verfahrens der Fig. 3 einsetzbar ist,

Fig. 12 ein Flussdiagramm einer detaillierten Implementierung des Verfahrens der Fig. 11,

Figuren 13A - 13D und 14 Darstellungen zur Veranschaulichung von Kopfmodellen,

Fig. 15 ein Diagramm zur Veranschaulichung eines Teilschritts einer Anpassung einer Brille in dem Verfahren der Fig. 12, und

Fig. 16 eine Ansicht eines Fassungsmodells zur Veranschaulichung einer Brückenweite.

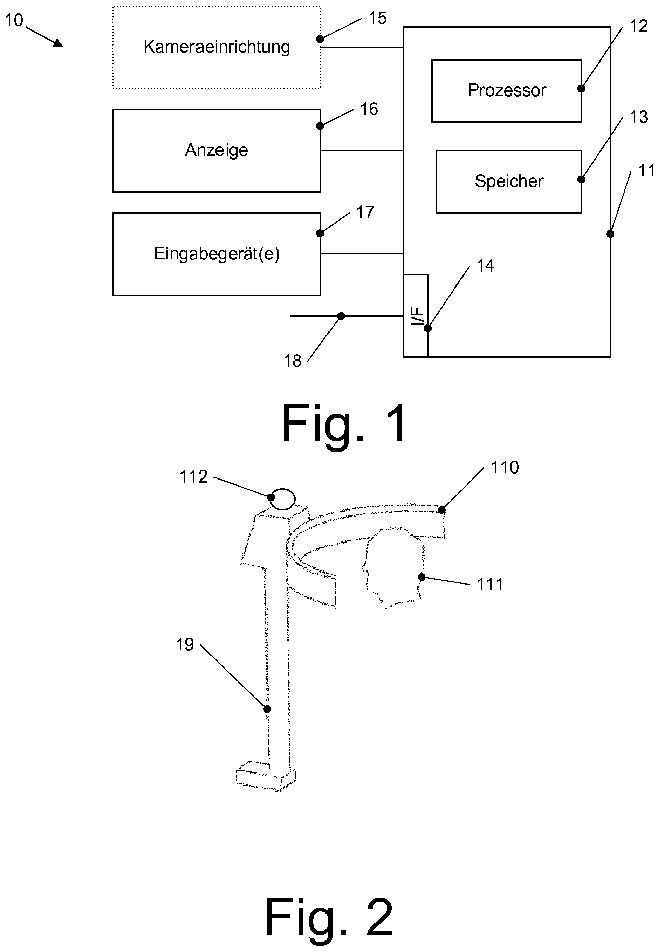

Die Fig. 1 zeigt ein Ausführungsbeispiel einer Vorrichtung zur virtuellen Brillenanpassung gemäß einem Ausführungsbeispiel. Die Vorrichtung der Fig. 1 umfasst eine Recheneinrichtung 11, welche einen Prozessor 12 sowie einen Speicher 13 aufweist. Der Speicher 13 dient zum Abspeichern von Daten und umfasst bei dem Ausführungsbeispiel der Fig. 1 einen Speicher mit wahlfreiem Zugrifft (Random Access Memory, RAM), einen Nur-Lese-Speicher (Read Only Memory, ROM) sowie eine oder mehrere Massenspeichermedien (Festplatte, Solid State Disc, optisches Laufwerk etc.). In dem Speicher 13 ist ein Programm abgelegt, mittels dem wenn es auf dem Prozessor 12 ausgeführt wird, ein Verfahren wie bereits oben beschrieben oder wie unten noch näher erläutert für eine virtuelle Brillenanpassung durchgeführt wird.

Die Vorrichtung der Fig. 1 verfügt weiter über eine Anzeige 16, auf welcher ein Kopf einer Person zusammen mit einer Brillenfassung angezeigt wird, wenn das Computerprogramm auf dem Prozessor 12 ausgeführt wird. Über ein oder mehrere Eingabegeräte 17, beispielsweise Tastatur und Maus, können Benutzereingaben vorgenommen werden. Zusätzlich oder alternativ kann die Anzeige 16 ein berührungsempfindlicher Bildschirm (Touchscreen) sein, um Eingaben vornehmen zu können.

Die Vorrichtung der Fig. 1 umfasst weiterhin eine Schnittstelle 14 zu einem Netzwerk 18, über das Daten empfangen werden können. Insbesondere können hier parametrische Fassungsmodelle von Brillenfassungen und zugeordnete Anpassungsrichtlinien von Brillenherstellern empfangen werden. Bei manchen Ausführungsbeispielen werden über die Schnittstelle 14 auch Daten zu einer weiteren Recheneinrichtung gesendet, um dort beispielsweise einen Teil der zur Brillenanpassung erforderlichen Berechnung durchzuführen. Zum Erstellen eines 3D-Modells eines Kopfes einer Person, an welchen die Brille anzupassen ist, umfasst die Vorrichtung der Fig. 1 optional eine Kameraeinrichtung 15, über welche mehrere Bilder der Person aus verschiedenen Richtungen aufgenommen werden können und das 3D-Modell bestimmt werden kann. Informationen zu einer derartigen Bestimmung von 3D-Modellen auf Basis von Bildaufnahmen finden sich beispielsweise in H. Hirschmüller "Stereo Processing by Semiglobal Matching and Mutual Information" in IEEE Transactions on Pattern Analysis and Machine Intelligence, vol. 30, no. 2, pp. 328-341, Feb. 2008.doi: 10.1109/TPAMI.2007.1166).

Die Fig. 2 zeigt eine Ausführungsform für die Kameraeinrichtung 15 der Fig. 1. Bei dem Ausführungsbeispiel der Fig. 2 ist eine halbkreisförmige Anordnung 110 von Kameras an einer Säule 19 befestigt. Eine Person kann sich dann derart hinstellen, dass ein Kopf 111 der Person wie in Fig. 2 gezeigt in der halbkreisförmigen Anordnung 110 positioniert ist und aus verschiedenen Richtungen aufgenommen werden kann. Hieraus kann dann ein 3D-Modell des Kopfes 111 erstellt werden. Aus den Bildaufnahmen ergibt sich auch eine Textur, d.h. Informationen hinsichtlich Farben (wie oben erläutert) des Modells. Eine derartige Vorrichtung kann zudem für Zentriermessungen verwendet werden, wie dies in der europäischen Patentanmeldung 17 153 556.0 beschrieben ist.

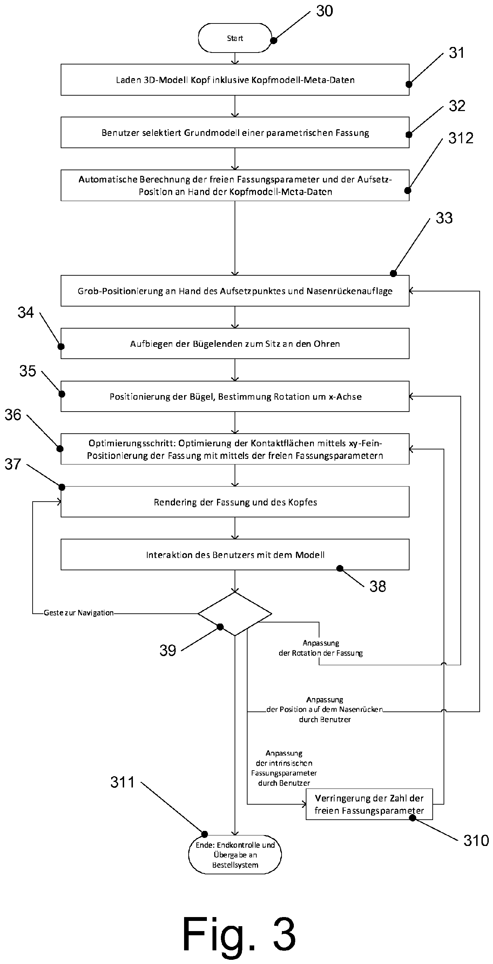

Die Fig. 3 zeigt ein Flussdiagramm eines Gesamtverfahrens zur virtuellen Brillenanpassung gemäß einem Ausführungsbeispiel. Die vorliegende Anmeldung bezieht sich insbesondere auf Teilschritte dieses Verfahrens.

Das Verfahren beginnt in Schritt 30. In Schritt 31 wird ein 3D-Modell des Kopfes inklusive Kopfmodell-Metadaten aus einem Speicher geladen. Das 3D-Modell kann wie oben unter Bezugnahme auf die Figuren 1 und 2 erläutert mit Hilfe von Bildaufnahmen erstellt werden oder kann ein bereits vorhandenes 3D-Modell sein, beispielsweise aus einer früheren Brillenanpassung für eine bestimmte Person.

Die Kopfmodell-Metadaten sind Daten, welche Informationen über Merkmale des 3D-Modells, jedoch nicht das Modell selbst enthalten. Insbesondere können die Metadaten Zusatzinformationen zu dem 3D-Modell des Kopfes liefern und/oder bestimmte Punkte, Kurven oder Bereiche auf dem 3D-Modell des Kopfes enthalten. Genaueres über die Verwendung derartiger Metadaten findet sich auch in der europäischen Patentanmeldung 17 173 929.5.

In Schritt 32 wird ein Grundmodell einer Brillenfassung, die durch ein parametrisches Fassungsmodell beschrieben ist, ausgewählt. Das parametrische Fassungsmodell weist freie, d.h. zu bestimmende, Parameter auf. Beispiele für derartige freie Parameter wurden bereits weiter oben bei der Beschreibung des parametrischen Fassungsmodells genannt, nämlich die Brückenweite oder Bügellänge der Brillenfassung, oder auch eine Form eines Fassungsrandes der Brillenfassung.

In Schritt 312 werden dann zumindest manche der Parameter auf Basis von einer dem Fassungsmodell zugeordneten Anpassungsrichtlinie berechnet, wie oben beschrieben und wie weiter unten näher erläutert. Andere Parameter werden auf Basis einer anatomischen Anpassung bestimmt, wie ebenfalls bereits erläutert.

In den Schritten 33 bis 310 erfolgt dann ein virtuelles Aufsetzen der Brille mit weitergehender anatomischer Anpassung. Hierzu erfolgt in Schritt 33 eine Grobpositionierung anhand eines Aufsetzpunktes und einer Nasenrückenauflage, wie dies in der europäischen Patentanmeldung 17 173 929.5 bereits beschrieben ist. In den Schritten 34 und 35 erfolgt ein Aufbiegen der Brillenbügel zu den Ohren des Kopfes und eine Positionierung der Bügel, wobei eine Rotation um eine x-Achse der Brille erfolgen kann. Die x-Achse entspricht dabei einer Richtung, die die Augen des Kopfes verbindet, die z-Richtung entspricht im Wesentlichen der Richtung der Bügel und die y-Richtung steht senkrecht hierzu. In Schritt 36 erfolgt eine Optimierung von Kontaktflächen der Brille mittels einer Feinpositionierung in der xy-Ebene. Zudem können hier in Schritt 312 noch nicht festgelegt Parameter weiter angepasst werden. Die Schritte 34-36 entsprechen dabei den entsprechenden in der europäischen Patentanmeldung 17 173 929.5 beschriebenen Schritten. Bei dieser Anpassung kann das parametrische Brillenmodell insbesondere deformiert und positioniert werden, nachdem die Parameter in Schritt 312 bestimmt wurden.

In Schritt 37 erfolgt dann ein Rendering der Fassung und des Kopfes, d.h. eine entsprechende Darstellung auf der Anzeige 16 der Fig. 1. Auch dieses Rendering ist in der europäischen Patentanmeldung 17 173 929.5 bereits beschrieben. Unter Rendering, auch als Rendern oder Bildsynthese bezeichnet, versteht man dabei das Erstellen eines Bildes (z.B. zur Anzeige auf einem Computerbildschirm) auf der Basis von Rohdaten, in diesem Fall aus den jeweiligen Modellen.

Dann folgt eine Interaktion des Benutzers mit dem Modell in Schritt 38, welche wie in Schritt 39 dargestellt verschiedene Folgen haben kann. So kann einfach eine Navigation erfolgen, beispielsweise um den Kopf aus einer anderen Richtung zu betrachten. In diesem Fall erfolgt ein erneutes Rendering in Schritt 37.

Durch die Interaktion in Schritt 39 kann auch die Rotation der Fassung um die x-Achse manuell angepasst werden. In diesem Fall springt das Verfahren zurück zu Schritt 35, um beispielsweise die Bügel entsprechend der neuen Stellung der Fassung zu bestimmen.

Zudem kann durch die Interaktion des Benutzers mit dem Modell auch die Position der Brillenfassung auf dem Nasenrücken des Kopfmodells durch einen Benutzer der Vorrichtung angepasst werden. Dies verändert im Wesentlichen die in Schritt 33 festgelegte Position der Brillenfassung. Daher springt in diesem Fall das Verfahren zu Schritt 33 zurück.

Diese bislang beschriebenen Arten der Interaktion, insbesondere Navigation beispielsweise zum Ändern des Betrachtungswinkels, Anpassen der Rotation und Anpassung der Position der auf dem Nasenrücken angeordneten Brille, sind ebenfalls bereits in der europäischen Patentanmeldung 17 173 929.5 detailliert erläutert.

Zudem kann bei der Interaktion auch einer der Fassungsparameter des parametrischen Fassungsmodells durch den Benutzer festgelegt werden. Beispielsweise kann hier der Benutzer die durch die automatische Berechnung in Schritt 312 erfolgte Bestimmung von Parametern verändern. In diesem Fall verringert dies bei Schritt 310 die Zahl der freien Fassungsparameter, und das Verfahren wird in Schritt 36 fortgesetzt. Wenn nach der Interaktion der Benutzer schlussendlich mit der Anpassung zufrieden ist, wird das Verfahren in Schritt 311 beendet. Dabei kann noch eine Endkontrolle stattfinden. Bei der Endkontrolle überprüft der Benutzer (z.B. ein Optiker) die Daten der Bestellung. Dabei werden ihm auf einem Übersichts-Bildschirm die Daten der Bestellung angezeigt sowie entsprechende bildhafte Darstellungen. Die Darstellungen zeigen die im Rahmen des Verfahrens bestimmten Parameter der Brillenfassung und/oder des Kopfes wie Brückenweite und Nasenflankenwinkel etc und auch die Parameter der bestellten Fassung, ggfs. auch Hinweise auf Abweichungen von einer Idealform, welche z.B. von den Anpassungsrichtlinien vorgegeben wird. Die Bestimmung derartiger Parameter wird später noch erläutert. Dann können die ermittelten Parameter an ein Bestellsystem des jeweiligen Herstellers übergeben werden, um eine reale Brillenfassung mit den entsprechenden Parametern zu bestellen.

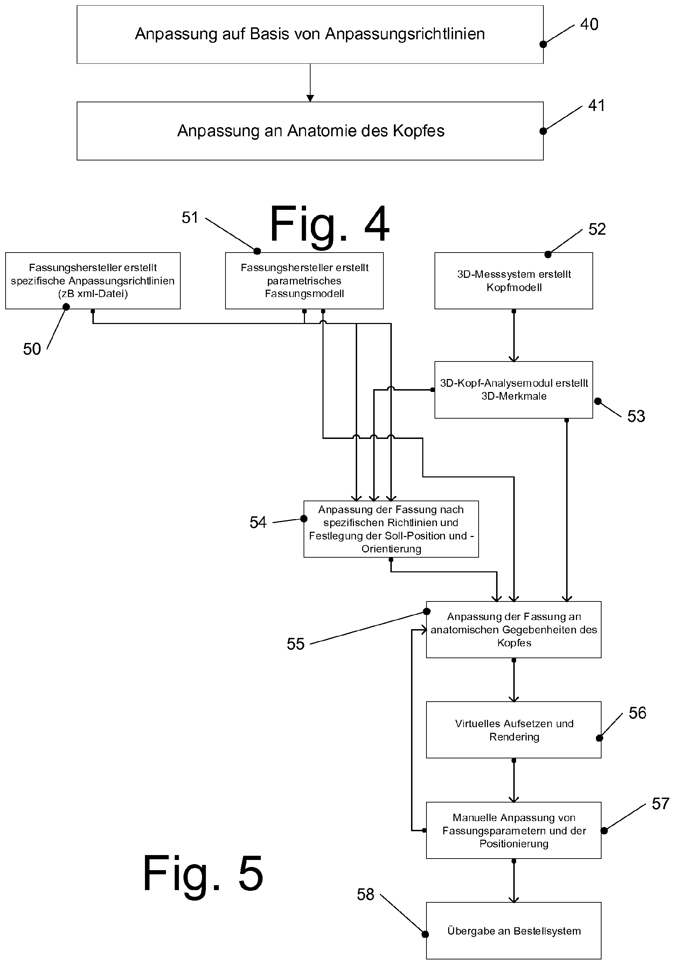

Im Folgenden werden nun einzelne Aspekte des Verfahrens der Fig. 3 unter Bezugnahme auf die Figuren 4-15 näher erläutert.

Die Fig. 4 zeigt ein Flussdiagramm eines Verfahrens gemäß einem Ausführungsbeispiel. Die Fig.4 zeigt eine Aufteilung der Brillenanpassung in eine Anpassung auf Basis von einem jeweiligen parametrischen Fassungsmodel zugeordneten Anpassungsrichtlinien gefolgt von einer Anpassung an eine Anatomie des Kopfes.

Bei dem Verfahren der Fig. 4 erfolgt in Schritt 40 eine Anpassung des parametrischen Fassungsmodells, an ein 3D-Modell des Kopfes der Person auf Basis von Anpassungsrichtlinien, welche von dem Brillenfassungshersteller der jeweiligen Brillenfassung spezifisch für die Brillenfassung vorgegeben sind. Diese Anpassungsrichtlinien können ästhetische Vorgaben betreffen, wie dies ebenfalls weiter unten näher erläutert wird. Implementierungsbeispiele für diesen Schritt werden später noch näher erläutert. Der Schritt 40 kann beispielsweise im Rahmen des Schrittes 312 der Fig. 3 durchgeführt werden.

Durch die Anpassung in Schritt 40 kann ein erster Teil von Parametern des parametrischen Fassungsmodells festgelegt werden.

In Schritt 41 wird dann eine allgemeine Anpassung an die Anatomie des Kopfes der Person vorgenommen, d.h. die Anpassung in Schritt 41 erfolgt unabhängig von den spezifischen Anpassungsrichtlinien. Diese Anpassung kann wie in dem eingangs zitierten Stand der Technik beschrieben erfolgen, und kann ebenso in Schritt 312 oder ggfs. auch in der Anpassung in den Schritten 34 und 35 erfolgen. Die anatomische Brillenanpassung kann dann auch auf Basis der Metadaten des Kopfmodells direkt geschehen, oder auch wie in Johannes Eber, "Anatomische Brillenanpassung", Verlag Optische Fachveröffentlichung GmbH, 1987, Seite 23ff. erläutert. Die Fig. 5 zeigt ein detailliertes Flussdiagramm einer Implementierung des Verfahrens der Figur 4.

Bei den Schritten 50-53 der Fig. 5 werden die Eingangsdaten für das Verfahren bereitgestellt. Bei Schritt 51 erstellt ein Fassungshersteller ein parametrisches Fassungsmodell für eine Brillenfassung. Das parametrische Fassungsmodell aus Schritt 51 kann dabei in ein einheitliches normiertes Format überführt werden, welches in dem erfindungsgemäßen Verfahren verwendet wird, wenn die Daten in einem proprietären CAD (Computer Aided Design) Format von dem Brillenhersteller geliefert werden.

Zudem kann eine Datenreduktion (beispielsweise eine Reduktion der Zahl an Dreiecken oder Voxeln in dem 3D-Modell) oder eine Datenkompression mit Hilfe herkömmlicher Kompressionsverfahren erfolgen.

In Schritt 50 erstellt der Fassungshersteller spezifische Anpassungsrichtlinien für dieses parametrische Fassungsmodell, welches wie erläutert ästhetische Aspekte bei der Fassungsanpassung berücksichtigen kann.

In den Schritten 52 und 53 wird ein 3D-Modell des Kopfes der Person erstellt und analysiert. In Schritt 52 wird dabei zunächst das Modell mit einem 3D-Messsystem, insbesondere mit der in Fig. 2 gezeigten Kameraeinrichtung, erstellt. Es können auch andere Messsysteme, wie 3D Kopfscanner verwendet werden. Beispiele für solche Kopfscanner finden sich auf http://cyberware.com/products/scanners/ps.html oder http://www.3d-shape.com/produkte/face_d.php, jeweils Stand 8. Juni 2017. In Schritt 53 werden dann Punkte oder Bereiche als Merkmale auf diesem Kopfmodell identifiziert, beispielsweise Punkte und Merkmale, wie sie auch im eingangs erläuterten Stand der Technik verwendet werden.

In Schritt 54 erfolgt dann die Anpassung der Fassung gemäß den spezifischen Anpassungsrichtlinien, entsprechend Schritt 40 der Fig. 4. Als Startwert für das Anpassen kann in Schritt 54 auch eine Soll-Position und Orientierung der Brillenfassung festgelegt werden. Als Soll-Position und Soll-Orientierung, die als Startwert für das Anpassen dienen können, kann eine Position mittels Metadaten wie in der europäischen Patentanmeldung 17 173 929.5 mit vorgegebenen Standard-Parametern für das parametrische Fassungsmodell dienen. Alternativ dazu kann die Soll-Position in manchen Fällen aus den spezifischen Anpassungsrichtlinien berechnet werden. Die spezifischen Anpassungsrichtlinien definieren beispielsweise die bevorzugte Lage des Fassungsrandes bzgl. der Pupillenzentren in der xz-Ebene; der Soll-Hornhautscheitelabstand (z.B. 12 mm) definiert die Lage in Richtung der y-Achse. Auch die Vorneigung als Teil der Orientierung der Fassung im Raum, also der Winkel um die x-Achse, kann auf einen Soll-Wert z.B. von 9 Grad gesetzt werden. Dies kann ebenfalls Bestandteil der spezifischen Anpassungsrichtlinien sein.

In Schritt 55 erfolgt dann eine Anpassung der Fassung an anatomische Gegebenheiten des Kopfes. Hierbei werden Parameter, welche in Schritt 54 noch nicht angepasst wurden, also noch freie Parameter sind, weiter angepasst.

In Schritt 56 erfolgt ein virtuelles Aufsetzen und Rendering, und in Schritt 57 ein manuelles Anpassen. Das virtuelle Aufsetzen und das manuelle Anpassen erfolgt dabei wie bereits unter Bezugnahme auf die Fig. 3, Bezugszeichen 33 bis 310 beschrieben.

In Schritt 58 erfolgt eine Übergabe an ein Bestellsystem des Fassungsherstellers, entsprechend Schritt 311 der Fig. 3.

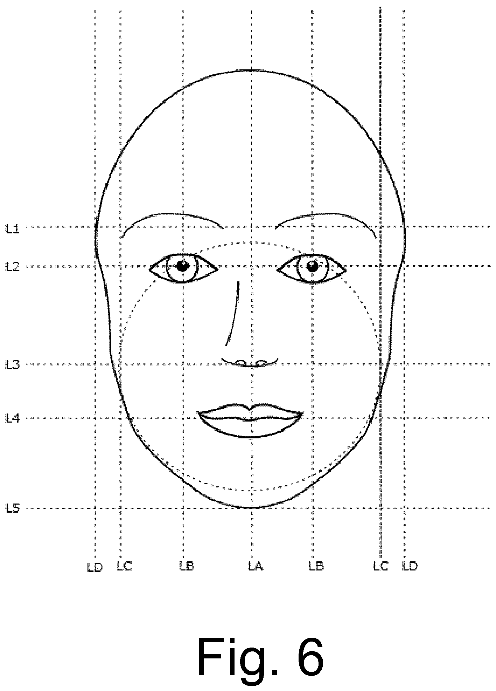

Die Verwendung von fassungsspezifischen Anpassungsrichtlinien und die entsprechende Anpassung werden nun noch unter Bezugnahme auf die Figuren 6-10 näher erläutert.

Die Fig. 6 zeigt verschiedene Gesichtsmerkmale, welche sich als Merkmale und Punkte im Gesicht für derartige spezifische Anpassungsrichtlinien eignen. In anderen Worten wird in den Anpassungsrichtlinien bei einem derartigen Ausführungsbeispiel eine Zielposition oder ein Zielbereich von Merkmalen der Brillenfassung relativ zu derartigen Punkten des Gesichts gegeben. Derartige Gesichtsmerkmale sind auch in Johannes Eber, "Anatomische Brillenanpassung", Verlag Optische Fachveröffentlichung GmbH, 1987, Seite 17ff. erläutert. Beispiele sind:

1. Position der Augen, insbesondere die Pupillenmitten (Kreuzungspunkt der Linie L2 mit den Linien LB in Fig. 6). Die Linie L2 bezeichnet zudem die Pupillenachse.
2. Boxmaße der Augen, d.h. Maße eines Rechtecks, welches um die Augen gelegt wird - Position jedes Rechtecks, Breite und Höhe der Rechtecke.
3. Position der Nase entsprechend den Linien LA und L3 in Fig. 6.
4. Gesichtsbreite und Position der Schläfen entsprechend den Linien LD der Fig. 6.
5. Gesichtshöhe zwischen den Linien L1 und L5 der Fig. 6 sowie die Kinnlinie (Linie L5) der Fig. 6.
6. Der Krümmungsradius des Kinnbereichs, d.h. des die Linie L5 berührenden Teils des Kinns.
7. Position der Augenbrauen, wobei die Linie L1 der Fig. 6 eine Mittelachse der Augenbrauen darstellt und die Linien LC eine äußere Begrenzung der Augenbrauen darstellen.
8. Position des Mundes entsprechend der Linie L4 der Fig. 6

Die obigen Merkmale können durch eine Herangehensweise wie später beschrieben mittels eines parametrischen Kopfmodells oder auch durch Bildanalyseverfahren (Bilderkennung) und/oder durch maschinelles Lernen in durch die Kameraeinrichtung der Fig. 2 aufgenommenen Bildern identifiziert werden und so deren Position am 3D-Modell des Kopfes bestimmt werden. Eine Möglichkeit zum automatischen Erkennen solcher Merkmale ist auch in V. Kazemi, J. Sullivan, "One millisecond face alignment with an ensemble of regression trees." Proceedings of the IEEE Conference on Computer Vision and Pattern Recognition, 2014, beschrieben.

In der folgenden Beschreibung sind Bezeichnungen wie linkes Auge, rechtes Auge, linke Gesichtshälfte oder rechte Gesichtshälfte aus Sicht der Person, der die Brille angepasst wird, zu verstehen.

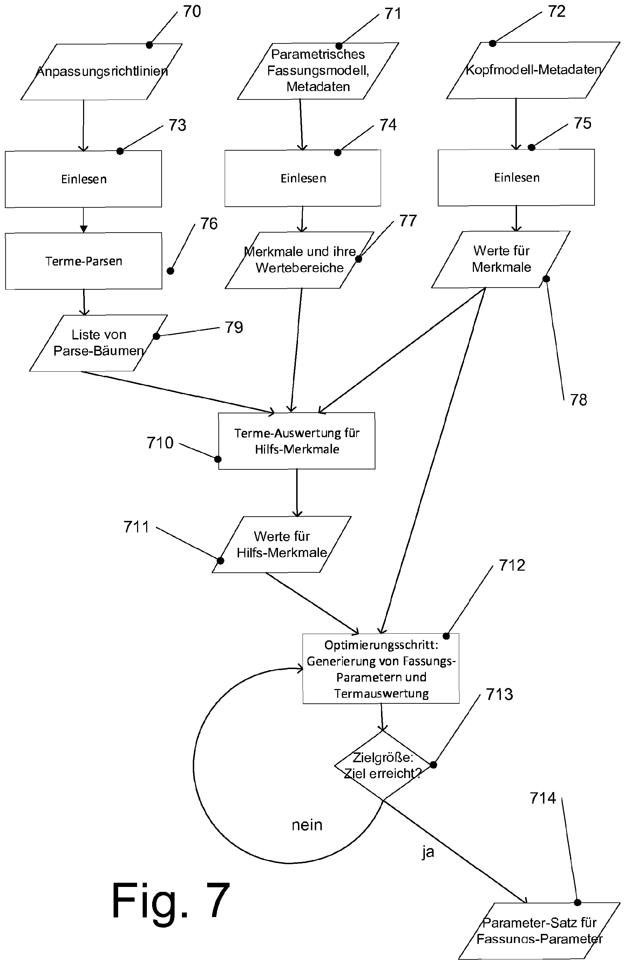

Die Fig. 7 zeigt ein detailliertes Verfahren für die Anpassung der Brillenfassung auf Basis der Anpassungsrichtlinien, also ein detailliertes Beispiel für den Schritt 40 der Fig. 4 bzw. den Schritt 54 der Fig. 5, zusammen mit dem Bereitstellen der Daten.

Bei Schritt 70 in Fig. 7 werden Anpassungsrichtlinien für ein parametrisches Fassungsmodel bereitgestellt, welche in Schritt 73 in eine Recheneinrichtung eingelesen werden, um sie in dem dargestellten Verfahren verwenden zu können. Die Anpassungsrichtlinien sind dabei beispielsweise als Textdatei wie eine xml-Datei oder JSON-Datei gespeichert.

Bei Schritt 71 ist ein parametrisches Fassungsmodell bereitgestellt, dem die Anpassungsrichtlinien bei Schritt 70 zugeordnet sind. Dem parametrischen Fassungsmodell können Metadaten zugeordnet sein, welche beispielsweise bestimmte Bereiche oder Punkte des Fassungsmodells bezeichnen. Derartige Metadaten eines Fassungsmodells sind auch in der europäischen Patentanmeldung 17 173 929.5 beschrieben. Dieses parametrische Fassungsmodell wird in Schritt 74 eingelesen. In Schritt 77 werden die sich aus dem Einlesen bei schritt 74 ergebenden Parameter des parametrischen Fassungsmodells und Ihre Wertebereiche für eine nachfolgende Optimierung bereitgestellt. Schließlich wird bei Schritt 72 ein 3D-Modell eines Kopfes der Person, der eine Brillenfassung anzupassen ist, mit dazugehörigen Metadaten bereitgestellt, welches in Schritt 75 eingelesen wird.

In Schritt 76 erfolgt ein Parsen der Anpassungsrichtlinien. Unter Parsen versteht man eine Zerlegung und Umwandlung von Eingabedaten in ein für die Weiterverarbeitung geeigneteres Format. Ein Parser ist eine entsprechende Einrichtung (üblicherweise durch ein Computerprogramm implementiert), das ein solches Parsen durchführt. Nähere Details hierzu finden sich in dem Wikipedia-Artikel "Parser", Stand 19. Mai 2017.

Hier werden die Anpassungsrichtlinien insbesondere in ein Format übersetzt, welches für den nachfolgenden Optimierungsprozess geeignet ist. Die Anpassungsrichtlinien können dabei wie erläutert Zielgrößen und/oder zulässige Bereiche enthalten, insbesondere für Abstände zwischen Merkmalen der Brillenfassung und Merkmalen am Kopf, zum Beispiel einen Abstand zwischen dem oberen Fassungsrand und den Augenbrauen, einen Abstand zwischen dem oberen Fassungsrand der Fassung zu einer Oberkante der Augen, einen Abstand des unteren Fassungsrandes zu einer Unterkante der Augen oder einer relativen Lage der Pupille zu den Fassungsrändern. Zudem können auch Abstände zu berechneten abgeleiteten Merkmalen, d.h. Punkten oder Bereichen, welche aus mehreren Merkmalen des Kopfes und/oder der Fassung abgeleitet sind, verwendet werden. Derartige abgeleitete Merkmale werden auch als Hilfsmerkmale bezeichnet.

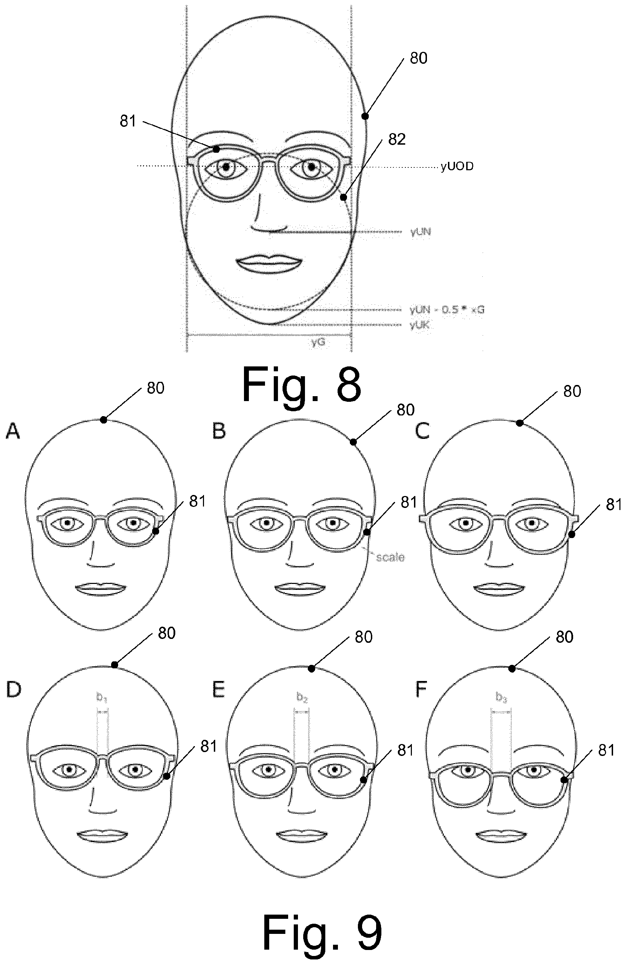

Ein Beispiel für ein derartiges Hilfsmerkmal ist in Fig. 8 dargestellt. Die Fig. 8 zeigt einen Kopf 80 mit einer Brillenfassung 81. Mit 80 ist ein gedachter Kreis mit einem Radius der halben Gesichtsbreite und Mittelpunkt an der Unterkante der Nase bezeichnet. yUN bezeichnet in Fig. 8 die Unterkante der Nase, yUK eine Unterkante des Kinns, und yUOD eine Unterkante der Augen. yG bezeichnet die Gesichtsbreite, d.h. den Abstand der Linien D der Fig. 6. Ein Beispiel für ein abgeleitetes Hilfsmerkmal yH, welches mit Hilfe eines Terms in den Anpassungsrichtlinien 70 definiert wird, welcher beim Parsen in Schritt 76 erfasst wird, ist

$$yH = (yUK - (yUN - 0.5 \cdot xG)) / 0.5 \cdot xG$$

Dieser Wert yH repräsentiert eine Abweichung einer rechnerischen Kinnunterkante eines Idealgesichts zu einer realen Kinnunterkante als Verhältnis zur halben Gesichtsbreite und ist ein Maß für die vertikale Länge des Gesichts unterhalb der Nase. Ein derartiges Hilfsmerkmal kann für die Festlegung der Proportionen der unteren Fassungsränder der Brillenfassung verwendet werden. Hierdurch kann berücksichtigt werden, dass auch die Länge des Gesichts in vertikaler Richtung einen Einfluss auf den ästhetischen Eindruck, den die Brillenfassung hervorruft, haben kann und somit die spezifischen Anpassungsrichtlinien eine Beziehung der Größe und/oder Form der Brillenfassung zu dem Parameter yH vorgeben können.

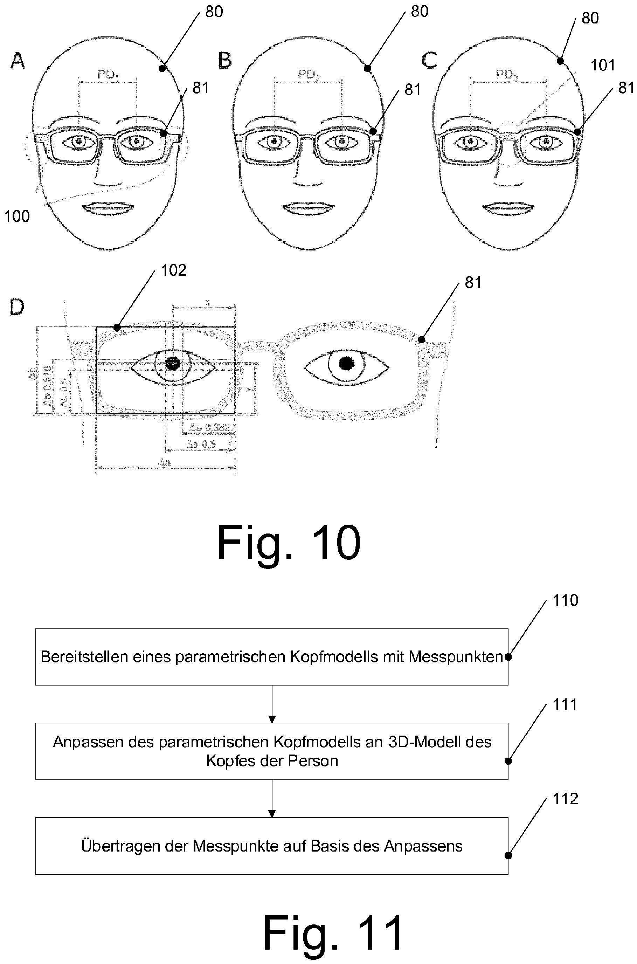

Ein weiteres Beispiel für eine Anpassungsrichtlinie ist eine Position der Pupille innerhalb einer fassungsumschreibenden Box. Dies ist in Fig. 10D dargestellt. Die Fig. 10D zeigt die Brillenfassung 81 mit einer fassungsumschreibenden Box 102, hier für das rechte Auge.

Die Durchblickshöhe der Pupille (Höhe der Pupille über dem unteren Fassungsrand) ist mit y bezeichnet, die horizontale Lage der Pupille mit x. Die Breite der Box 102 beträgt $\Delta a$ und die Höhe der Box $\Delta b$. Die Anpassungsrichtlinie kann dann beispielsweise vorsehen, dass sich die Pupille in horizontaler Richtung zwischen der Boxmitte und dem nasalen goldenen Schnitt befinden soll, d.h. $\Delta a \cdot 3{,}82 < x < \Delta a \cdot 0{,}5$. Der goldene Schnitt bedeutet dabei, dass das Verhältnis von x zu $\Delta a$-x gleich dem Verhältnis von $\Delta a$-x zu $\Delta a$ ist, was für x = $\Delta a \cdot 3{,}82$ der Fall ist. Augenpositionen, die näher an der Innenseite des Fassungsrandes sind als dieser goldene Schnitt, werden im Allgemeinen als wenig ästhetisch empfunden.

Eine ähnliche Richtlinie kann die Augenposition in vertikaler Richtung festgelegt werden, nämlich dass sich die Pupille in vertikaler Richtung eben zwischen der Boxmitte der Box 102 und dem Wert für den goldenen Schnitt oberhalb der Mitte befindet, d.h. $\Delta b \cdot 0{,}5 < y < \Delta b \cdot 0{,}618$.

Die Anpassungsrichtlinien können auch direkt als Berechnungsformel bereitgestellt sein, wobei die Variablen der Berechnungsformel dann die oben beschriebenen Merkmale sind. In anderen Worten können die Fassungsparameter in der spezifischen Anpassungsrichtlinie direkt als Term angegeben sein, oder sie können iterativ durch eine Optimierungsschleife bestimmt werden. Im letzteren Fall wird eine Anpassungsgüte optimiert, welche mit Hilfe der Terme definiert ist; die Terme legen Ziele fest - jedoch werden diese Ziele im allgemeinen Fall nicht getroffen; daher würde z.B. ein Ausdruck der Form "Zielgröße=Term" nur im Sinne einer Optimierung z.B. im Sinne der Methode der kleinsten Quadrate zur Anpassungsgüte beitragen, jedoch nicht direkt erfüllt.

Das Parsen in Schritt 76 erfolgt insbesondere für die angesprochenen Hilfsmerkmale, für Zielgrößen und Berechnungsvorschriften hierfür und optional für einen Gütewert als skalare Größe, welche in beispielsweise in Form einer gewichteten Quadratsumme der Abweichung von den Zielgrößen vorliegt und gegebenenfalls einen zusätzlichen Strafterm aufweisen kann, wie dies bereits weiter oben beschrieben wurde.

In Schritt 79 wird dann eine Liste von Syntaxbäumen für die Terme aus Schritt 76 erstellt.

Entsprechend werden in Schritt 78 für das Kopfmodell Position, Orientierung und Dimension für Werte wie Position der Pupillenmitte, Position und Dimension des Auges (beispielsweise eines das Auge beschreibenden Rechtecks), Position, Orientierung und Dimension der Nase, Position, Orientierung und Position der Augenbrauen und/oder Position des Kinns bestimmt.

In Schritt 710 werden die Terme des Baumes für Hilfsmerkmale ausgewertet, d.h. es wird bestimmt, welche Hilfsmerkmale vorliegen, und in Schritt 711 werden Werte für diese Hilfsmerkmale, beispielsweise für den oben erläuterten Wert yH bestimmt. In Schritt 712 erfolgt dann ein Optimierungsschritt. Hier werden Fassungsparameter des parametrischen Fassungsmodells variiert und die Terme ausgewertet, bis in Schritt 713 Zielgrößen erreicht sind. Hieraus ergibt sich bei 714 ein Parametersatz für einen Teil der Fassungsparameter, welche auf Basis der Anpassungsrichtlinien angepasst wurden. Diese Parameter sind insbesondere Parameter, welche eine ästhetische Wirkung haben, beispielsweise Skalierung der Brillenfassung, Vorneigung der Brillenfassung und/oder eine Form des Fassungsrandes im Falle eines variablen Fassungsrandes. Weitere Parameter wie beispielsweise Winkel von Nasenpads oder eine Länge von Brillenbügeln oder eine Brückenweite werden zunächst auf Standardwerten, welche vom Herstelle vorgegeben sind, belassen. Diese werden dann bei der anatomischen Anpassung (beispielsweise Schritt 41 der Fig. 4) angepasst.

Die Optimierungsschleife kann auch ein virtuelles Aufsetzen z.B. wie in der europäischen Patentanmeldung 17 173 929.5 beschrieben umfassen. Durch die vorhergehenden Schritte einschließlich der Anpassung der Parameter des parametrischen Fassungsmodells wird eine Konvergenz der Optimierung auf eine optimale Brillenanpassung sichergestellt. Bei dem virtuellen Aufsetzen ergeben sich als Ergebnis zum einen die Parameter der mathematischen Bewegung (6 Freiheitsgrade, siehe Wikipedia-Artikel "Bewegung (Mathematik)", Stand 22. Mai 2017), darstellbar beispielsweise als Rotationsmatrix und Translationsvektor, und zum anderen die Parameter der Verbiegung der Fassung. Letzteres ist in der Regel ein einziger Parameter für den Winkel, den der Ohrauflagepunkt bei der Verbiegung zurückgelegt. Dies entspricht dem virtuellen Aufsetzen wie es in der europäischen Patentanmeldung 17 173 929.5 beschrieben ist. Das Ergebnis des dort beschriebenen virtuellen Aufsetzens sind die Rotation und Translation der Fassung und die Parameter der Deformation der Bügel.

Nach dem Aufsetzen sind alle fassungsspezifischen Merkmale im Koordinatensystem des Kopfes verfügbar. Dazu wird die mathematische Bewegung auf die Merkmale angewandt. Beispielsweise wird die Position und Orientierung des rechten und linken Nasenpads der individualisierten Fassung berechnet - d.h. der Fassung entsprechend dem parametrischen Fassungsmodell mit angepassten Parametern. Im Idealfall sollte diese Position und Orientierung übereinstimmen mit der zuvor berechneten Position im Schritt der Anpassung der fassungsspezifischen Parameter, bei dem ja das entsprechende Merkmal der Nasenflanke mit dem Merkmal auf der Fassung in Übereinstimmung gebracht wurde, wie später noch konkret erläutert werden wird. Es kann jedoch vorkommen, dass der Prozess des virtuellen Aufsetzens bedingt durch Einschränkungen der Individualisierung im Nasenbereich nicht zum selben Ergebnis bei der Positionsbestimmung der Fassung kommt wie der Anpassungsvorgang. Dies kann zum Beispiel durch Asymmetrien der realen Nase bedingt sein im Zusammenhang mit einer symmetrischen Nasenauflage der Fassung. In der Regel sollten sich jedoch die Positionen nur sehr geringfügig unterscheiden. Bei geringfügigen Unterschieden (beispielsweise Abstand der Nasenpadmittelpunkte kleiner als 1 mm) kann dies ignoriert werden. Bei größeren Unterschieden kann die neue Position nach dem virtuellen Aufsetzen einen neuen Anpassungsvorgang der auf Basis der fassungsspezifischen Anpassungsrichtlinien zu bestimmenden Parameter auslösen. Auch eine Rückmeldung in Form eines Hinweises an den Bediener auf eine mögliche Unverträglichkeit des Fassungsmodells ist möglich.

Die Figuren 10A bis 10C veranschaulichen diese Positionierung des Auges innerhalb der Box 102 für verschieden Pupillenabstände $PD_1$ (Fig. 10A), $PD_2$ (Fig. 10B) und $PD_3$ (Fig. 10C) in dem Kopf 80, wobei $PD_1$ ein relativ kleiner Pupillenabstand, $PD_2$ ein mittlerer Pupillenabstand und $PD_3$ ein relativ großer Pupillenabstand ist. Zur ästhetischen Anpassung wird im Fall der Fig. 10A ein äußerer Rand der Fassungsform 100 verdickt und mit dominanten Backen ausgebildet, um beispielsweise die Bedingung des goldenen Schnittes zu halten. Die Backen sind der äußere Teil des Mittelteils der Brillenfassung, der innere Teil wird als Brücke bezeichnet. Der veränderte Parameter ist hier also die Fassungsform. Im Falle der Fig. 10C wird ein dominanter Bereich bzw. eine dominante Brücke gegebenenfalls in Verbindung mit einer größeren Brückenweite gewählt, um einen gewünschten ästhetischen Eindruck zu erhalten.

Die Fig. 9 zeigt Beispiele der Anpassung der Parameter auf Basis von Anpassungsrichtlinien zur Erlangung eines gewünschten ästhetischen Effekts. Die Figuren 9A bis 9C zeigen dabei einen Effekt einer Skalierung der Brillenfassung 81. In Fig. 9A wird der Person virtuell eine sehr kleine Fassung aufgesetzt, welche nach ästhetischen und modischen Gesichtspunkten zu klein wird. In Fig. 9C ist die Fassung zu groß. In Fig. 9B weist die Fassung eine mittlere Größe auf. Um eine ästhetisch passende Brillengröße sicherzustellen, können die Anpassungsrichtlinien in diesem Fall Abstände des Fassungsrandes vom Gesichtsrand und/oder von den Augenbrauen vorschreiben.

Die Figuren 9D bis 9F zeigen einen Einfluss der Brückenweite. Die Brückenweite wird in bei dem hier beschriebenen Ausführungsbeispiel bei der anatomischen Anpassung eingestellt, um einen anatomisch korrekten Sitz der Brillenfassung auf der Nase zu gewährleisten, was weiter unten näher erläutert wird. Sie kann aber auch den ästhetischen Eindruck verändern, was bei der anatomischen Anpassung zusätzlich berücksichtigt werden kann. In Fig. 9D ist eine kleine Brückenweite $b_1$ gewählt. Hier sitzt die Fassung wegen einer Kollision mit dem Nasenrücken sehr hoch. In Fig. 9E wurde die Brückenweite auf eine Brückenweite $b_2$ etwas erweitert. Hierdurch sitzt die Brillenfassung etwas tiefer und harmonischer. Im Falle der Fig. 9F wurde die Brückenweite noch weiter auf einen Wert $b_3$ erniedrigt. Hier kann bei der anatomischen Anpassung darauf geachtet werden, dass sich die Pupillen innerhalb eines vorgegebenen Bereichs relativ zu den Fassungsrändern befinden, beispielsweise auf Basis des goldenen Schnittes.

Somit kann mit Hilfe von Anpassungsrichtlinien und durch die Aufteilung in eine Anpassung auf Basis der Anpassungsrichtlinien gefolgt von einer Anpassung an die Anatomie des Kopfes sichergestellt werden, dass Vorgaben eines Brillenherstellers, welche insbesondere ästhetischer Natur sind, erfüllt werden können.

Bei den oben genannten Verfahren und auch bei anderen Verfahren zur Brillenanpassung, beispielsweise dem in der europäischen Patentanmeldung 17 173 929.5 beschriebenen Verfahren oder bei manchen der Verfahren, welche eingangs als Stand der Technik erläutert wurden, wird die Position bestimmter Punkte auf dem 3D-Modell des Kopfes benötigt, und/oder es werden Metadaten benötigt, welche bestimmte Bereiche zur Brillenanpassung wie einen Auflagepunkt oder einen Ohrauflagebereich charakterisieren. Eine Möglichkeit ist, derartige Punkte oder Bereiche manuell oder mittels Mustererkennungsverfahren zu bestimmen. Eine weitere Möglichkeit wird nunmehr unter Bezugnahme auf die Figuren 11-15 erläutert.

Die Fig. 11 zeigt ein Verfahren zur Festlegung von Messpunkten auf das 3D-Modell des Kopfes der Person gemäß einem Ausführungsbeispiel. Unter Messpunkten sind dabei Punkte zu verstehen, welche für die oben beschriebenen Verfahren benutzt werden können, wie z.B. Punkte, die Gesichtsmerkmale wie Ohren, Augen, Augenbrauen und dergleichen beschreiben.

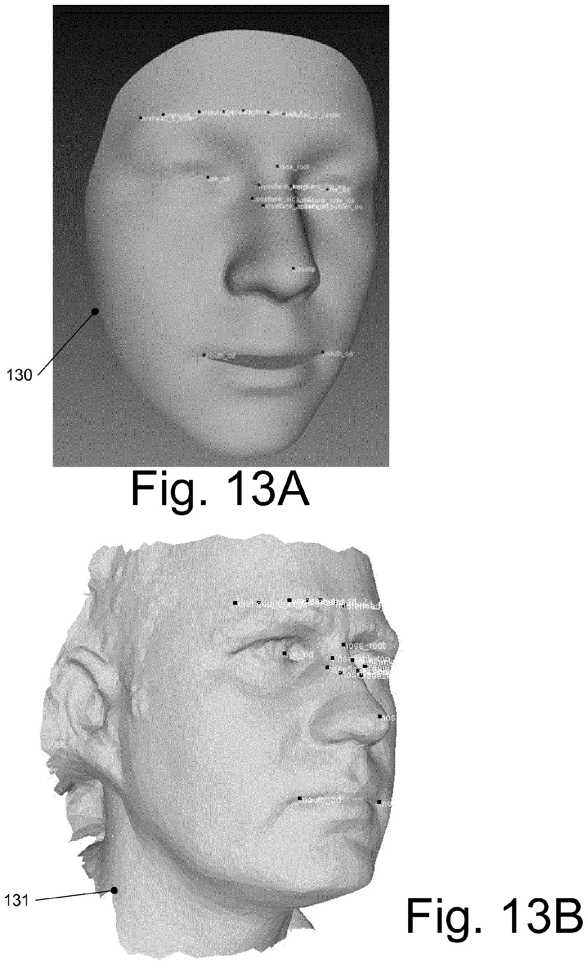

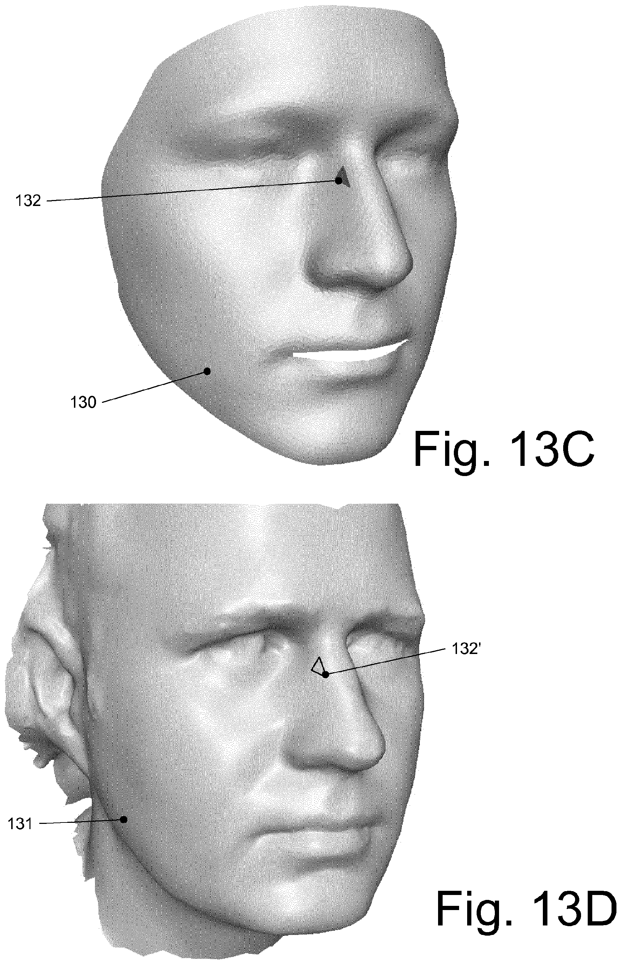

In Schritt 110 wird ein parametrisches Kopfmodell mit Messpunkten bereitgestellt. Ein parametrisches Kopfmodell ist dabei ein parametrisches Modell, welches einen Kopf beschreibt. Durch Ändern der Parameter des parametrischen Modells ändert sich die von dem Kopfmodell beschriebene Kopfform. Der Begriff parametrisches Kopfmodell wie hier gebraucht schließt auch Modelle ein, die nur einen Teil des Kopfes beschreiben, beispielsweise nur die Teile, welche zu einer Brillenanpassung benötigt werden (insbesondere die Augenpartie, Nase und Ohren). Ein Beispiel für ein parametrisches Kopfmodell wird später unter Bezugnahme auf die Fig. 13A und 13C erläutert. Auf diesem parametrischen Kopfmodell werden Messpunkte festgelegt, beispielsweise durch manuelle Auswahl. Beispiele für derartige Messpunkte werden ebenfalls später unter Bezugnahme auf die Fig. 13A und 13C erläutert.

In Schritt 111 wird dann das parametrische Kopfmodell an das 3D-Modell des Kopfes der Person angepasst. Hierzu können beliebige herkömmliche Optimierungsverfahren verwendet werden, welche die Parameter des parametrischen Kopfmodells so anpassen, dass eine möglichst geringe Abweichung zwischen dem parametrischen Kopfmodell und dem 3D-Modell des Kopfes der Person vorliegt (beispielsweise mittels des Verfahrens der kleinsten Quadrate oder den in dem oben zitierten Artikel von J. Booth et al. Verfahren). In Schritt 112 werden dann die Messpunkte auf Basis des Anpassens auf das 3D-Modell des Kopfes der Person übertragen. In anderen Worten wird die Position der Messpunkte auf dem angepassten parametrischen Kopfmodell benutzt, um entsprechende Messpunkte an dem 3D-Modell des Kopfes festzulegen. Dies kann durch eine Projektion von dem parametrischen Kopfmodell auf das 3D-Modell des Kopfes erfolgen, beispielsweise indem ein Schnittpunkt eines Normalenvektors, d.h. eines bei dem Messpunkt auf dem parametrischen Kopfmodell senkrecht stehenden Vektors, mit dem 3D-Modell des Kopfes verwendet wird. Bei genauen Modellen kann auch direkt die Position des Messpunktes auf dem parametrischen Kopfmodell als Position auf dem 3D-Modell des Kopfes verwendet werden.

Auf diese Weise können Messpunkte für im Wesentlichen beliebige 3D-Modelle von beliebigen Köpfen bestimmt werden, wobei die Messpunkte nur einmal auf dem parametrischen Kopfmodell festgelegt werden müssen.

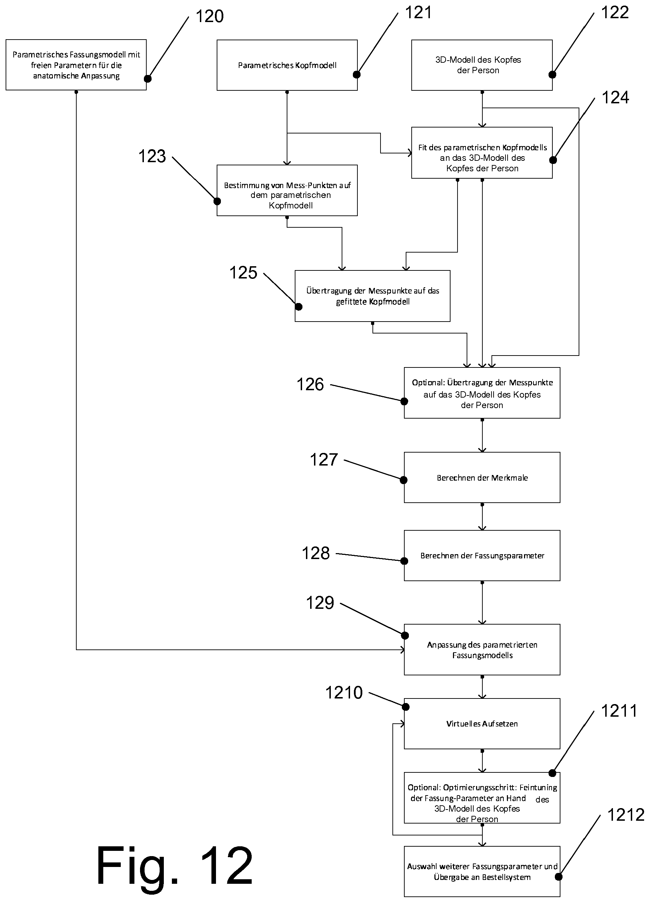

Die Fig. 12 zeigt ein detaillierteres Verfahren, welches ein parametrisches Kopfmodell zur Festlegung von Messpunkten an einem 3D-Modell eines Kopfes einer Person benutzt, eingebettet in ein Verfahren zur virtuellen Brillenanpassung. Statt des Verfahrens zur virtuellen Brillenanpassung der Fig. 12 können auch die vorher unter Bezugnahme auf die Figuren 1-10 erläuterten Verfahren als Anwendungsmöglichkeit für das Verfahren der Fig. 11 dienen.

In Fig. 12 wird in Schritt 120 ein parametrisches Fassungsmodell mit freien Parametern bereitgestellt. Bei dem Ausführungsbeispiel der Fig. 12 dienen die freien Parameter der anatomischen Anpassung. Bei anderen Ausführungsbeispielen kann zusätzlich eine Anpassung mittels fassungsspezifischer Anpassungsrichtlinien wie oben erläutert erfolgen.

In Schritt 121 wird ein parametrisches Kopfmodell bereitgestellt. Das parametrische Kopfmodell kann ein aufgrund einer Hauptkomponentenanalyse (PCA) bestimmtes Gesichtsmodell oder Kopfmodell sein, wie beispielsweise in A. Brunton, A. Salazar, T. Bolkart, S. Wuhrer, "Review of Statistical Shape Spaces for 3D Data with Comparative Analysis for Human Faces", Computer Vision and Image Understanding, 128:1-17, 2014 beschrieben, oder auch ein Kopfmodell wie in J. Booth, A. Roussos, S. Zafeiriou, A. Ponniah und D. Dunaway "A 3D Morphable Model learnt from 10,000 faces", 2016 IEEE Conference on Computer Vision and Patent Recognition (CVPR), Las Vegas, NV 2016 Seiten 5543-5552 doi:10.1109/CVPR.2016.598 beschrieben. In Schritt 122 wird ein 3D-Modell des Kopfes der Person bereitgestellt, welches beispielsweise mit der Kameraeinrichtung der Fig. 2 erstellt werden kann.

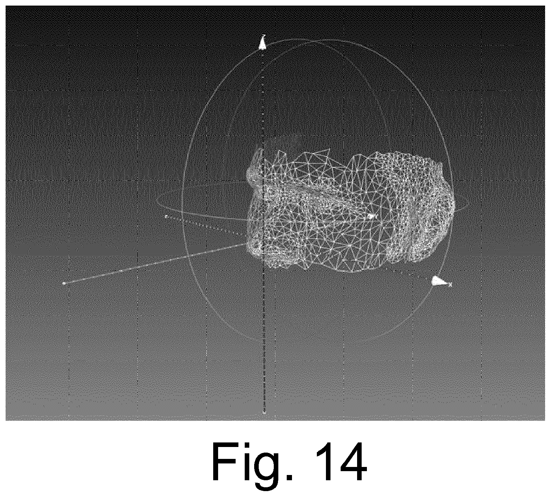

In Schritt 123 werden Messpunkte auf dem parametrischen Kopfmodell bestimmt. Ein Beispiel für ein derartiges 3D-Modell zumindest eines Gesichtsteils ist zusammen mit Koordinatenachsen in der Fig. 14 dargestellt.

In Schritt 123 werden Messpunkte auf dem parametrischen Kopfmodell bestimmt. Hierzu wird ein sogenannter Standardkopf des parametrischen Kopfmodells bereitgestellt. Ein Standardkopf ist ein Kopf, in welchen die Parameter des parametrischen Kopfmodells vorgegebene Standardwerte annehmen. Im Falle eines Kopfmodells auf Basis einer Hauptkomponentenanalyse kann dies beispielsweise ein Durchschnittskopf, welcher einer ersten Komponente der Hauptkomponentenanalyse entspricht, sein.

In Schritt 123 werden Messpunkte auf dem parametrischen Kopfmodell festgelegt. Dies kann manuell durch Festlegen von Punkten geschehen. Ein Beispiel für eine derartige Festlegung ist in der Fig. 13A gezeigt. Hier sind in einem Standardkopf 130 des parametrischen Kopfmodells eine Vielzahl von Punkten festgelegt, beispielsweise Mundwinkel, Nasenspitze, Punkte auf einer Stirnlinie, Augenpunkte, Nasenwurzel, und Punkte auf Nasenflanken. Ein weiteres Beispiel ist in Fig. 13C gezeigt. Hier ist ein Dreieck 132, d.h. drei Punkte, auf einer Nasenflanke des Kopfmodells 130 markiert.

In Schritt 124 wird das parametrische Kopfmodell an das 3D-Modell des Kopfes der Person durch einen Fit-Prozess angepasst. Ein Fit-Prozess ist ein Prozess, bei dem Parameter des parametrischen Kopfmodells so bestimmt werden, dass das parametrische Kopfmodell möglichst genau an das 3D-Modell des Kopfes der Person angepasst wird, beispielsweise nach dem Kriterium der kleinsten Quadrate. Die Schritte 123 und 124 können in beliebiger Reihenfolge erfolgen. Der Schritt 123 muss nur einmal vor Durchführung des Verfahrens durchgeführt werden, so dass die bestimmten Messpunkte bei jeder Durchführung des Verfahrens für verschieden 3D-Modelle von Köpfen verschiedener Personen und verschiedene parametrische Fassungsmodelle verwendet werden können.

In Schritt 125 werden dann die Messpunkte auf das gefittete parametrische Kopfmodell übertragen. In anderen Worten wird die Position der Messpunkte auf dem gefitteten Kopfmodell bestimmt. Hierzu wird im Wesentlichen die gleiche Transformation, welche benutzt wird, um von dem Standardkopfmodell, auf dem in Schritt 123 die Messpunkte bestimmt wurden, zu dem gefitteten parametrischen Kopfmodell zu gelangen, auf die Messpunkte angewendet, beispielsweise wie in dem oben genannten Artikel von J. Booth et al. beschrieben. In Schritt 126 werden optional die Messpunkte auf das 3D-Modell des Kopfes übertragen. Ob der Schritt 126 verwendet wird, hängt von der Genauigkeit des verwendeten Modells ab, d.h. davon, wie genau das gefittete parametrische Kopfmodell dem 3D-Modell des Kopfes der Person entspricht. Wenn beispielsweise die mittlere quadratische Abweichung unterhalb eines Schwellenwertes ist, kann der Schritt 126 weggelassen werden. Die Übertragung der Messpunkte von dem gefitteten parametrischen Kopfmodell auf das 3D-Modell des Kopfes der Person kann durch eine Projektion erfolgen, bei welcher ein Normalenvektor durch den jeweiligen Messpunkt auf dem gefitteten Kopfmodell bestimmt wird und der Schnittpunkt dieses Normalenvektors mit dem 3D-Modell des Kopfes der Person dann als entsprechender Messpunkt auf dem 3D-Modell des Kopfes der Person verwendet wird. Beispiele sind in den Fig. 13B und 13D gezeigt. In der Fig. 13B sind die Punkte der Fig. 13A auf ein 3D-Modell 131 des Kopfes der Person projiziert, und in Fig. 13D ist das Dreieck 132 der Fig. 13C als Dreieck 132' auf das 3D-Modell 131 projiziert.

Diese Projektion arbeitet bei vielen Gesichtsmodellen zuverlässig, da parametrische Modelle häufig eine hohe Glattheit aufweisen, insbesondere eine höhere Glattheit als ein typisches 3D-Modell des Kopfes wie in Fig. 14 dargestellt. Die Glattheit von Oberflächen kann dabei als Maß der lokalen Abweichung von Normalenvektoren definiert sein. Alternativ kann als Maß auch die lokale Abweichung der Punktewolke des 3D-Modells des Kopfes von einer approximierenden Polynomfläche definiert sein, z.B. jeweils in lokalen Bereichen von 5 mm Durchmesser. Polynomflächen sind unendlich oft differenzierbar und somit in der Differentialgeometrie als "glatt" bezeichnet. Eine lokale Glättung mittels "moving least squares" (MLS), die bei Ausführungsbeispielen angewendet werden kann, ist auf http://pointclouds.org/documentation/tutorials/resampling.php, Stand 8. Juni 2017, beschrieben.

Zudem kann (in Fig. 12 nicht dargestellt) ein manueller Schritt verwendet werden, um weitere Messpunkte an dem 3D-Modell des Kopfes zu markieren. Dies können insbesondere Punkte sein, die mit dem 3D-Modell nicht ohne weiteres erfasst werden, beispielsweise durch Haare verdeckte Teile der Person. Dies kann insbesondere bei den Ohren der Fall sein. Daher sind diese Punkte dann im 3D-Modell des Kopfes der Person nicht genau identifizierbar und können manuell hinzugefügt werden. Ein Beispiel für einen derartigen Messpunkt ist ein Auflagepunkt des Brillenbügels am Ohransatz.

In Schritt 127 werden dann auf Basis der Messpunkte (der Messpunkte an dem gefitteten Kopfmodell, wenn Schritt 126 entfällt oder der übertragenen Messpunkte, wenn Schritt 126 durchgeführt wird) Merkmale berechnet. Diese Merkmale, auch als Messmerkmale bezeichnet, basieren auf Gruppen von Messpunkten und definieren beispielsweise einen Bereich des Kopfes.

Die Merkmale können mittels direkter Berechnung (z.B. definieren 3 nicht kollineare Punkte im Raum eindeutig eine Ebene, deren Normalenvektor mittels Kreuzprodukt aus den normalisierten Differenzvektoren berechnet werden kann; 4 nicht koplanare Punkte definieren eine Sphäre, 5 nicht koplanare Punkte einen Zylinder) oder mittels Approximation einer geometrischen Primitive (Punkte, Linien oder Flächen) wie einer Ebene oder Kugel oder eines Zylinders an bestimmte Messpunkte ermittelt werden. Das Merkmal ist dann durch die Parameter der angepassten geometrischen Primitive bestimmt, im Falle einer Ebene beispielsweise durch Normalenvektor und Aufpunkt der Ebene, im Falle einer Kugel durch Mittelpunkt und Radius der Kugel etc. Im Folgenden werden Beispiele für derartige Merkmale, die in Schritt 127 berechnet werden, angegeben:

- linke oder rechte Nasenflanke

Für die linke oder rechte Nasenflanke der Nase kann eine Ebene (beispielsweise entsprechend dem Dreieck 132' der Fig. 13D) definiert durch die Approximation an einen kleinen Bereich des Modells im Bereich der Nasenauflage bzw. der Bereiche für die Nasenpads (beispielsweise mit einem Durchmesser von 6 mm) als Merkmal verwendet werden. Aus der Lage der Ebene ergeben sich der horizontale und der vertikale Nasenflankenwinkel. Dabei wird die Ebene im Mittelpunkt des Bereichs der Nasenauflage mit den Koordinatenachsen geschnitten und jeweils der sich ergebende Winkel gemessen. Wenn zum Beispiel drei Punkte entsprechend dem Dreieck 132 auf jeder Nasenflanke in Fig. 13C markiert sind, kann die Ebene aus den drei Punkten berechnet werden. Bei mehr als drei Punkten kann die Ebene durch einen Anpassungsprozess, beispielsweise mittels Hauptkomponentenzerlegung auf der Punktmenge, berechnet werden, oder durch eine Anpassung mit Hilfe des Verfahrens der kleinsten Quadrate. Eine einzelne Ebene ist wie oben erwähnt darstellbar durch einen Punkt (x, y und z) in der Ebene und einen Normalenvektor (nx, ny, nz) durch diesen Punkte, wobei x, y und z kartesische Koordinaten sind. Beide Nasenflanken zusammen können daher als 12-Tupel, d.h. mit 12 Werten (2 Punkten und 2 Normalenvektoren) dargestellt werden, beispielsweise als $(x_{[N,OD]}, y_{[N,OD]}, z_{[N,OD]}, nx_{[N,OD]}, ny_{[N,OD]}, nz_{[N,OD]}, x_{[N,OS]}, y_{[N,OS]}, z_{[P,OS]}, nx_{[N,OS]}, ny_{[N,OS]}, nz_{[N,OS]})$

Dabei bezeichnet der Index N die Nase, der Index OD das rechte Auge (Okulus Dexter) und der Index OS das linke Auge (Okulus Sinister).

- Krümmung der Stirn

Hier kann ein Ausschnitt aus einer Kreiskurve im Raum an Messpunkte auf der Stirn wie in Fig. 13A und 13C dargestellt angepasst werden. Parameter dieser Anpassung sind Mittelpunkt, Radius und Normalenvektor einer Ebene, in der der Kreis liegt. Diese Anpassung kann in zwei Schritten erfolgen. Zunächst wird eine Anpassung einer Ebene wie oben für die Nasenflanken beschrieben durchgeführt, und dann wird in der Ebene noch ein Kreis angepasst. Diese Anpassung des Kreises kann beispielsweise mit dem Verfahren der kleinsten Quadrate oder irgendeinem anderen herkömmlichen Anpassungsverfahren geschehen.

- Augenbraue und/oder Wangenknochen

Hier wird in einem Gebiet um die Augenbrauen und/oder in einem Gebiet um die Wangenknochen eine Spline-Fläche S (siehe Wikipedia-Artikel "Spline", Stand 23. Mai 2017) oder ein bivariates Polynom (siehe zB https://en.wikipedia.org/wiki/Polynomial#Definition → "bivariate polynomial", Stand 8. Juni 2017) an die Messpunkte im Gebiet der Augenbrauen und im Gebiet von Wangenknochen angepasst. Bei einer Spline-Repräsentation

$$S_{(c1,...,cn)}: (x,z) \to y$$

werden dabei Koeffizienten $(c1..., cn)$ der Spline-Funktion S so bestimmt, dass für eine Menge von Messpunkten $\{(x1,y1,z1),...,(xm,ym,zm)\}$ in dem entsprechenden Gebiet (Augenbrauen oder Wangenknochen) ein Fehler F im Quadratmittel minimal wird, d.h. der Fehler F hat folgende Gestalt

$$F(c1,\ldots,cn) = \sum_{i=1\ldots m} (yi - S_{(c1,...,cn)} (xi,zi))^2$$

Bei dieser Darstellung wird angenommen, dass später der Prozess des Aufsetzens der Fassung durch Bewegung parallel zu einer xy-Ebene mit jeweils festgehaltenem y-Wert in dem Koordinatensystem der Fig. 14 erfolgt. Wenn ein Mindestabstand eines hinteren Fassungsrandes von dem 3D-Modell des Kopfes durch den Anpassungsprozess realisiert werden soll, kann dieser Abstandswert vorab als Offset auf die Spline-Fläche gegeben werden. Dann kann eine Berührung durch Übereinstimmung in den y-Werten detektiert werden (da der y-Wert vorher als Offset hinterlegt wird). Hierzu kann dann bei der späteren Anpassung der Brillenfassung jeder Vertex des hinteren Fassungsrandes untersucht werden, und ein jeweiliger Vertex gegeben durch die Koordinaten (x, y, z) wird bezüglicher der Differenz $\Delta y$ = y - $S_{(c1,...cn)}$: (x, z) untersucht. Bei der Detektion eines Berührens oder Eintauchens des Vertex in das Modell kann dann eine Position der Brillenfassung angepasst werden oder der Fassungsrand der Brillenfassung modifiziert werden.

- Ohransatzpunkt, welcher als Auflagepunkt für den Brillenbügel dient

Hierzu kann ein einzelner Punkt auf dem Kopfmodell verwendet werden, d.h. hier müssen keine Messpunkte zusammengefasst werden. Bei anderen Ausführungsformen kann eine Ohrauflagekurve bestimmt werden, wie dies in der europäischen Patentanmeldung 17 173 929.5 beschrieben ist. Falls ein Modell ohne Modellierung der Ohren verwendet wird (siehe oben), beispielsweise ein reines Gesichtsmodell, oder die Ohren bei der Erstellung des 3D-Modells des Kopfes der Person verdeckt waren, kann dieser Ohransatzpunkt anderweitig generiert werden, beispielsweise über maschinelles Lernen auf Bildern, die für die Erstellung des 3D-Modells des Kopfes verwendet wurden, wobei hierzu ein antrainierter Merkmalsdetektor verwendet werden kann, um den Ohransatzpunkt in den Bildern zu detektieren. Diese im 2D-Bild detektierten Punkte werden in einem weiteren Schritt auf das 3D-Modell des Kopfes projiziert. Informationen zu derartigen Projektionen finden sich in Grundlagenliteratur zu projektiver Geometrie und Kamerakalibrierung, z.B. Hartley und Zisserman, "Multiple View Geometry in Computer Vision", 2000, ab Seite 7 für die Darstellung von Bildpixeln als Geraden im Raum; Projektion auf ein 3D-Modell im Raum als Berechnung des vordersten Schnittpunktes des Dreiecksnetzes mit der Geraden, auch als "Ray-Casting" bezeichnet, siehe auch zB die Software-Library "vtk", Funktion "vtkModifiedBSPTree::IntersectWithLine". Alternativ kann ein derartiger Punkt auch manuell bestimmt werden wie oben erläutert.

Bei manchen Ausführungsbeispielen können auch bestimmte Punkte wie Augenposition oder Pupillenposition mit einem separaten Verfahren bestimmt werden, beispielsweise mittels Pupillendetektion und Cornea (Hornhaut)-Detektion mit der Kamera der Fig. 2 aufgenommen Bildern. Derartige Bestimmungen sind in den europäischen Patentanmeldungen 17 153 558.3 und 17 153 559.4 beschrieben.

Auf Basis der so in Schritt 127 berechneten Merkmale werden dann in Schritt 128 Fassungsparameter des parametrischen Fassungsmodells berechnet. Im Folgenden wird ein Beispiel für diese Berechnung gegeben. Die Merkmale können aber auch für die vorstehend beschriebene Fassungsanpassung auf Basis von spezifischen Anpassungsrichtlinien oder für das virtuelle Aufsetzen wie der in der europäischen Patentanmeldung 17 173 929.5 beschrieben verwendet werden.

Allgemein werden zur Anpassung die Merkmale in Kombination ausgewertet bezüglich relativen Lage und/oder weiterer Eigenschaften wie Winkel oder Krümmung. Im Folgenden werden einige Beispiele für die Berechnung der Fassungsparameter in Schritt 128 beschrieben. Diese können auch als Beispiel für die anatomische Anpassung des Schritts 41 der Fig. 4 dienen.

- Brückenweite

Die Brückenweite ist in der DIN EN ISO 8624:2015-12, Anhang A definiert und ergibt sich aus der Relativposition der Nasenpads, da bei weiterer Brückenweite Nasenpads weiter auseinander liegen und bei engerer Brückenweite die Nasenpads näher zusammenliegen. Bei einer Brillenfassung ohne Nasenpads werden verallgemeinerte Nasenpads als spezielle Bereiche der Nasenauflage definiert, die als Kontaktbereiche mit der Nase vorgesehen sind. Die Brückenweite ergibt sich als Abstand der Mittelpunkte dieser verallgemeinerten Nasenpads. So kann die Brückenweite einem Abstand von Mittelpunkten von Dreiecken auf beiden Nasenflanken entsprechend dem Dreieck 132' der Fig. 13D entsprechen. Als Mittelpunkt des Dreiecks kann dabei der geometrische Schwerpunkt, d.h. der Mittelpunkt der Winkelhalbierenden, genommen werden.

Die Figur 16 zeigt zur Veranschaulichung eine Perspektivansicht eines parametrischen Fassungsmodells mit Nasenpads 160 (in diesem Sinne) und der Brückenweite 161.

- Relativposition und Winkel der Nasenpads

Diese Anpassung ist in Fig. 15 erläutert. Hier sind die Nasenflanken als Querschnitt dargestellt. Dieser ist durch eine Kurve 150 repräsentiert, und ein Nasenpad 151 wird angepasst.

Jedes der beiden Nasenpads kann durch eine Ebene angepasst werden, welche das jeweilige Nasenpad berührt (Tangentialebene). Diese Ebene des Nasenpads kann wie oben für andere Ebenen beschrieben durch einen Aufpunkt $(X_P, y_P, z_P)$ und einen Normalenvektor $(nx, ny, nz)$ approximiert werden. Der Aufpunkt kann insbesondere ein Mittelpunkt des Nasenpads gegeben sein. Bei Nasenpads im klassischen Sinn, d.h. bei Metallfassungen ist dieser Mittelpunkt z.B. durch eine Projektion des Schwerpunkts des Nasenpads auf die Außenseite d.h. die Kontaktfläche des Pads mit der Nase definiert- wobei der Pad-Mittelpunkt auch als vordefinierter Punkt Teil des parametrisierbaren Fassungsmodells sein kann - d.h. dieser Punkt wird zusammen mit dem Modell mitgeliefert. Bei Kunststofffassungen ohne abgesetzte Pads wird der Teil der Fassung, der als Kontaktfläche für die Nase gedacht ist (160 in Fig. 16), als Nasenauflage oder hier verallgemeinert als Nasenpad bezeichnet. Somit können die beiden Nasenpads ebenso als 12-Tupel dargestellt werden, wobei die Darstellung bei dem vorliegenden Ausführungsbeispiel im lokalen Koordinatensystem der Fassung erfolgt:

$(x_{[P,OD]}, y_{[P,OD]}, z_{[P,OD]}, nx_{[P,OD]}, ny_{[P,OD]}, nz_{[P,OD]}, x_{[P,OS]}, y_{[P,OS]}, z_{[P,OS]}, nx_{[P,OS]}, ny_{[P,OP]}, nz_{[P,OS]})$ wobei der Index P für Nasenpad steht.

Die Lage der Nasenpads impliziert wie oben erläutert dann auch die Brückenweite.

Bei dieser Darstellung der Nasenpads lässt sich der Koordinatenursprung und die Orientierung des Koordinatensystems frei wählen, da das 12-Tupel durch eine gemeinsame Translationsabbildung auf die Aufpunkte und eine gemeinsame Rotationabbildung Aufpunkte und Normalenvektoren in jedes beliebige Koordinatensystem überführbar ist. Voraussetzung ist, dass bei dem parametrischen Fassungsmodell tatsächlich alle Parameter aus dem obigen 12-Tupel frei wählbar sind. In der Praxis sind bei einem parametrischen Fassungsmodell die Parameter eingeschränkt, und es gibt Maximal- und Minimalwerte für die einzelnen Parameter des parametrischen Fassungsmodells (beispielsweise kann eine Fassung nicht beliebig groß oder mit beliebig großer oder beliebig kleiner Brückenweite gefertigt werden). In jedem Fall lassen sich sowohl die Nasenpads als auch wie oben angesprochen die Nasenflanken als 12-Tupel darstellen.

Die Normalenvektoren lassen sich statt in kartesische Koordinaten wie oben jeweils durch zwei Winkel theta und phi im Raum darstellen (im Wesentlichen eine Darstellung in Polarkoordinaten, wobei als Länge (Radius) des Normalenvektors 1 gewählt wird:

$(nx, ny, nz) = (\sin(phi)*\sin(theta), \cos(phi)*\sin(theta), \cos(theta))$.

Somit ergeben sich dann insgesamt 10 Freiheitsgrade für die Pads und somit auch für die Nasenbrücke) gemeinsam, man erhält eine Darstellung als 10-Tupel:

$$(x_{[P,OD]}, y_{[P,OD]}, z_{[P,OD]}, theta_{OD}, phi_{OD}, x_{[P,OS]}, y_{[P,OS]}, z_{[P,OS]}, theta_{OS}, phi_{OS})$$

$$= z_{[P,OS]}$$

Der Zusammenhang zwischen Nasenbrückenbreite und Position der Nasenpads ist aus Fig. 15 ersichtlich: Wird die Nasenbrücke verbreitert, vergrößert sich der Abstand zwischen den Aufpunkten der Ebenen des linken und rechten Pads entsprechend, und umgekehrt.

Eine Verringerung der Anzahl von Parametern tritt auf, wenn angenommen wird, dass die Brücke und die Nasenpads zueinander symmetrisch sind. Mit der yz-Ebene aus Fig. 14 als Symmetrieebene gilt:

i. $x_{[P,OS]} = -x_{[P,OD]}$
ii. $y_{[P,OD]} = y_{[P,OS]}$ und $z_{[P,OD]} = z_{[P,OS]}$
iii. theta $_{[P,OD]}$ = theta $_{[P,OS]}$ und phi $_{[P,OD]}$ = - phi $_{[P,OS]}$

Dann ergeben sich als freie Parameter (w, $y_P$, $z_P$, theta, phi) mit theta = theta$_{[P,OD]}$ = theta$_{[P,OS]}$ und phi = phi$_{[P,OD]}$ = - phi$_{[P,OS]}$. w ist dabei die Brückenweite, wobei gilt $x_{[P,OD]}$ = w/2 und $x_{[P,OS]}$ = -w/2. Somit liegen im symmetrischen Fall 5 freie Parameter vor, mit welchen das parametrische Fassungsmodell angepasst werden kann. Je nach Fassung können weniger Freiheitsgrade vorliegen, oder die Freiheitsgrade können mittels spezifischer Anpassungsrichtlinien wie oben erläutert eingeschränkt werden.

Um das parametrische Fassungsmodell an das 3D-Modell des Kopfes anzupassen, können die Ebenen der Nasenpads so gewählt werden, dass sie mit den Ebenen der Nasenflanken übereinstimmen, d.h. im allgemeinen Fall stimmen die 12-Tupel für die Nasenpads mit dem 12-Tupel für die Nasenflanken überein.

Als Einschränkung kann zum Beispiel die Position der Brücke bzw. der Nasenpads im lokalen Koordinatensystem der Fassung festgehalten werden (d.h. die Werte $y_P$, $z_P$ sind fest), oder für theta und phi kann ein fester zum Beispiel linearer Bezug zueinander gewählt werden, so dass theta und phi nicht unabhängig voneinander wählbar sind.

Bei einem reduzierten Satz von Fassungsparametern beispielsweise in dem oben genannten symmetrischen Fall kann eine Mittelung verwendet werden. Unterscheiden sich beispielsweise die entsprechenden Winkel theta$_{[P,OD]}$ und theta$_{[P,OS]}$ für die Nasenflanken, kann ein Mittelwert verwendet werden. Falls sich die Winkel stärker als ein Schwellenwert voneinander unterscheiden kann eine Warnung ausgegeben werden, so dass die symmetrische Fassungsform hier zu ungünstige Trageeigenschaften gibt. Zur Bewertung, wie ungünstig die Trageeigenschaften sind, kann ein Qualitätsmaß, welches die anatomische Anpassqualität bezeichnet, verwendet werden. Ein solches Qualitätsmaß kann auf Basis der oben erwähnten Abstände der Brillenfassung zu Bereichen des Kopfes berechnet werden, wobei verschiedene Abstände mit verschiedener Gewichtung in das Qualitätsmaß einfließen können. [

Je nach Art der parametrischen Fassung lassen sich die Anzahl der freien Parameter weiter reduzieren, beispielsweise auf zwei Parameter im Bereich der Nasenauflage, nämlich Brückenweite und ein Parameter für den Stegwinkel. Der Stegwinkel ist z.B. in Johannes Eber, "Anatomische Brillenanpassung", Verlag Optische Fachveröffentlichung GmbH, 1987Seite 26, Abb 24 zum Stegwinkel erläutert.

- pantoskopischer Winkel der Fassung

Des Weiteren kann mittels der Merkmale der pantoskopische Winkel der Fassung (auch als Vorneigungswinkel bezeichnet) berechnet oder angepasst werden. In Ausführungsbeispielen, bei welchen fassungsspezifische Anpassungsrichtlinien wie oben erläutert verwendet werden, kann der pantoskopische Winkel bereits bei dieser Anpassung (Schritt 40 in Fig. 4) eingestellt werden. Diese kann dann in Schritt 128 der Fig. 12 weiter angepasst werden. Hierzu wird ein Abstand des Fassungsrandes (beispielsweise der hinteren Kante des unteren Randes des Fassungsrandes, linke bzw. rechte untere Ecke in einer Frontansicht der Fassung) zu den oben erwähnten Wangenflächen, die druch ein Spline-Fläche repräsentiert sein können, berechnet. Der pantoskopische Winkel wird dann so geändert, dass ein vorgegebener Mindestabstand, z.B. 2 mm, gewährleistet ist.

- Bügellänge

Die Bügellänge wird in Schritt 128 berechnet, wenn der Sitz der Fassung auf der Nase festgelegt wurde, beispielsweise über die oben genannten Nasenpads. Zur Einstellung der Bügellänge der Fassung (sofern diese ein freier Parameter des parametrischen Fassungsmodells ist) wird ein vorderer Auflagepunkt der Bügel mit den oben erwähnten Ohransatzpunkten zur Deckung gebracht.

In Schritt 129 werden dann die in Schritt 128 berechneten Fassungsparameter auf das parametrische Fassungsmodell angewandt. In Schritt 1210 erfolgt dann ein virtuelles Aufsetzen und Renderin wie unter Bezugnahme auf Schritt 56 der Fig. 5 beschrieben. In Schritt 1211 kann optional eine weitere Optmierung stattfinden, beispielsweise eine Optimierung wie in der eingangs erwähnten US 2016/0327811 A1 beschrieben oder eine manuelle Anpassung wie in Schritt 57 der Fig. 5 beschrieben erfolgen. In Schritt 1212 erfolgt dann eine Übergabe an das Bestellsystem. Es können auch weitere Fassungsparameter ausgewählt werden, beispielsweise eine Farbe des Mittelteils der Brillenfassung, eine Farbe der Brillenbügel der Brillenfassung" Material und Farbe der Scharniere der Brillenfassung, Gravuren auf den Brillenbügeln der Brillenfassung, Designelemente, Applikationen auf Brillenbügeln oder Mittelteil der Brillenfassung.

**Patentansprüche**

1. Computerimplementiertes Verfahren zur Brillenanpassung, umfassend:

   virtuelles Anpassen eines parametrischen Fassungsmodells (81) an ein 3D-Modell (72) eines Kopfes einer Person,
   **dadurch gekennzeichnet, dass** das virtuelle Anpassen umfasst:

   einen ersten Anpassungsvorgang (40) des parametrischen Fassungsmodells (71) an das 3D-Modell des Kopfes (72) zur Erfüllung von für das parametrische Fassungsmodell (71) spezifischen Anpassungsrichtlinien (70), wobei die Anpassungsrichtlinien Zielwerte oder Zielbereiche für Abstände zwischen Merkmalen der Brillenfassung und Merkmalen am Kopf angeben, und
   einen zweiten Anpassungsvorgang (41) des parametrischen Fassungsmodells (71) an das 3D-Modell (72) des Kopfes zur anatomischen Anpassung.

2. Verfahren nach Anspruch 1, **gekennzeichnet durch** eine Konvertierung der Anpassungsrichtlinien und/oder des parametrischen Fassungsmodells in ein vorgegebenes Format.

3. Verfahren nach Anspruch 1 oder 2, **dadurch gekennzeichnet, dass** das parametrische Fassungsmodell eine Vielzahl von Parametern umfasst, wobei in dem ersten Anpassungsvorgang ein erster Teil der Parameter bestimmt wird und in dem zweiten Anpassungsvorgang ein von dem ersten Teil verschiedener zweiter Teil der Parameter bestimmt wird.

4. Verfahren nach Anspruch 3, **dadurch gekennzeichnet, dass** der erste Teil der Parameter eine Skalierung der Brillenfassung, eine Vorneigung und/oder eine Form eines Fassungsrandes der Brillenfassung umfasst.

5. Verfahren nach einem der Ansprüche 1-4, **dadurch gekennzeichnet, dass** die spezifischen Anpassungsrichtlinien Vorgaben für aus Merkmalen der Fassung und/oder Merkmalen des Kopfes abgeleitete Merkmale umfassen.

6. Verfahren nach einem der Ansprüche 1-5, **dadurch gekennzeichnet, dass** der erste Anpassungsvorgang eine Verwendung eines Syntaxbaums umfasst.

**7.** Verfahren nach einem der Ansprüche 1-6, **dadurch gekennzeichnet, dass** der erste Anpassungsvorgang einen Optimierungsprozess in einer Zielfunktion auf Basis einer Abweichung von Zielwerten der spezifischen Anpassungsrichtlinien und/oder auf Basis eines Strafterms bei Überschreiten von Zielbereichen umfasst.

**8.** Verfahren nach einem der Ansprüche 1-7, **dadurch gekennzeichnet, dass** der erste Anpassungsvorgang ein wiederholtes Durchlaufen einer Optimierungsschleife umfasst.

**9.** Verfahren nach einem der Ansprüche 1-8, **dadurch gekennzeichnet, dass** der erste Anpassungsvorgang eine Berücksichtigung eines Gewichtes von Brillengläsern umfasst.

**10.** Verfahren nach einem der Ansprüche 1-9, **dadurch gekennzeichnet, dass** das parametrische Fassungsmodell und/oder die spezifischen Anpassungsrichtlinien in verschlüsselter Form vorliegen.

**11.** Verfahren nach einem der Ansprüche 1-10, weiter umfassend Berechnen eines Qualitätsmaßes für das virtuelle Anpassen.

**12.** Computerprogramm mit einem Programmcode, welcher bewirkt, dass, wenn der Programmcode auf einem Prozessor ausgeführt wird, das Verfahren nach einem der Ansprüche 1-11 durchgeführt wird.

**13.** Vorrichtung zur virtuellen Brillenanpassung umfassend einen Prozessor und einen Speicher in dem das Computerprogramm nach Anspruch 12 zur Ausführung auf dem Prozessor gespeichert ist.

**Claims**

**1.** Computer-implemented method for adapting spectacles, comprising:

virtually adapting a parametric frame model (81) to match a 3D model (72) of a head of a person,
**characterized in that** the virtual adapting comprises:

a first adaptation process (40) for the parametric frame model (71) to match the 3D model of the head (72) in order to satisfy adaptation guidelines (70) specific to the parametric frame model (71), wherein the adaptation guidelines specify target values or target areas for distances between features of the spectacle frame and features on the head, and
a second adaptation process (41) for the parametric frame model (71) to match the 3D model (72) of the head for an anatomical adaptation.

**2.** Method according to Claim 1, **characterized by** conversion of the adaption guidelines and/or of the parametric frame model into a prescribed format.

**3.** Method according to Claim 1 or 2, **characterized in that** the parametric frame model comprises a multiplicity of parameters, wherein in the first adaptation process a first portion of the parameters is determined and in the second adaptation process a second portion of the parameters, which is different from the first portion, is determined.

**4.** Method according to Claim 3, **characterized in that** the first portion of the parameters comprises a scaling of the spectacle frame, a forward lean and/or a shape of a frame rim of the spectacle frame.

**5.** Method according to one of Claims 1-4, **characterized in that** the specific adaptation guidelines comprise stipulations for features derived from features of the frame and/or features of the head.

**6.** Method according to one of Claims 1-5, **characterized in that** the first adaptation process comprises a use of a syntax tree.

**7.** Method according to one of Claims 1-6, **characterized in that** the first adaptation process comprises an optimization process in a target function on the basis of a deviation from target values of the specific adaption guidelines and/or on the basis of a penalty term in the event of target areas being exceeded.

**8.** Method according to one of Claims 1-7, **characterized in that** the first adaption process comprises repeatedly executing an optimization loop.

9. Method according to one of Claims 1-8, **characterized in that** the first adaption process comprises taking into consideration a weight of spectacle lenses.

10. Method according to one of Claims 1-9, **characterized in that** the parametric frame model and/or the specific adaptation guidelines are in encrypted form.

11. Method according to one of Claims 1-10, further comprising calculating a measure of quality for the virtual adapting.

12. Computer program having a program code that, when the program code is executed on a processor, causes the method according to one of Claims 1-11 to be performed.

13. Apparatus for virtual spectacle adaptation comprising a processor and a memory in which the computer program according to Claim 12 is stored for execution on the processor.


**Revendications**

1. Procédé d'adaptation de lunettes mis en oeuvre par ordinateur, comprenant :

l'adaptation virtuelle d'un modèle paramétrique de monture (81) à un modèle 3D (72) de la tête d'une personne, **caractérisé en ce que** l'adaptation virtuelle comprend :

une première opération d'adaptation (40) du modèle paramétrique de monture(71) au modèle 3D de la tête (72) pour satisfaire à des directives d'adaptation (70) spécifiques du modèle paramétrique de monture (71), dans lequel les directives d'adaptation précisent des valeurs cibles ou des plages cibles pour des distances entre des caractéristiques de la monture de lunettes et des caractéristiques concernant la tête, et une seconde opération d'adaptation (41) du modèle paramétrique de monture (71) au modèle 3D (72) de la tête à des fins d'adaptation anatomique.

2. Procédé selon la revendication 1, **caractérisé par** une conversion des directives d'adaptation et/ou du modèle paramétrique de monture en un format prédéterminé.

3. Procédé selon la revendication 1 ou 2, **caractérisé en ce que** le modèle paramétrique de monture comprend une pluralité de paramètres, dans lequel une première partie des paramètres est déterminée lors de la première opération d'adaptation et une seconde partie des paramètres, différente de la première partie, est déterminée lors de la seconde opération d'adaptation.

4. Procédé selon la revendication 3, **caractérisé en ce que** la première partie des paramètres comprend une mise à l'échelle de la monture de lunettes, une pré-inclinaison et/ou une forme d'une bordure de la monture de lunettes.

5. Procédé selon l'une des revendications 1 à 4, **caractérisé en ce que** les directives d'adaptation spécifiques comprennent des indications concernant des caractéristiques dérivées de caractéristiques de la monture et/ou de caractéristiques de la tête.

6. Procédé selon l'une des revendications 1 à 5, **caractérisé en ce que** la première opération d'adaptation comprend l'utilisation d'un arbre syntaxique.

7. Procédé selon l'une des revendications 1 à 6, **caractérisé en ce que** la première opération d'adaptation comprend un processus d'optimisation vers une fonction cible sur la base d'un écart par rapport à des valeurs cibles des directives d'adaptation spécifiques et/ou sur la base d'un terme de pénalité lors d'un dépassement de plages cibles.

8. Procédé selon l'une des revendications 1-7, **caractérisé en ce que** la première opération d'adaptation comprend un passage répété dans une boucle d'optimisation.

9. Procédé selon l'une des revendications 1-8, **caractérisé en ce que** la première opération d'adaptation comprend la prise en compte d'un poids de verres de lunettes.

**10.** Procédé selon l'une des revendications 1 à 9, **caractérisé en ce que** le modèle paramétrique de monture et/ou les directives d'adaptation spécifiques sont présents sous forme cryptée.

**11.** Procédé selon l'une des revendications 1-10, comprenant en outre le calcul d'une mesure de qualité pour l'adaptation virtuelle.

**12.** Programme informatique comportant un code de programme qui, lorsque le code de programme est exécuté sur un processeur, met en oeuvre le procédé selon l'une des revendications 1-11.

**13.** Dispositif d'adaptation virtuelle de lunettes, comprenant un processeur et une mémoire dans laquelle est stocké le programme informatique selon la revendication 12 à des fins d'exécution sur le processeur.

**Fig. 1**

**Fig. 2**

30

Start

31

Laden 3D-Modell Kopf inklusive Kopfmodell-Meta-Daten

32

Benutzer selektiert Grundmodell einer parametrischen Fassung

312

Automatische Berechnung der freien Fassungsparameter und der Aufsetz-Position an Hand der Kopfmodell-Meta-Daten

33

Grob-Positionierung an Hand des Aufsetzpunktes und Nasenrückenauflage

34

Aufbiegen der Bügelenden zum Sitz an den Ohren

35

Positionierung der Bügel, Bestimmung Rotation um x-Achse

36

Optimierungsschritt: Optimierung der Kontaktflächen mittels xy-Fein-Positionierung der Fassung mit mittels der freien Fassungsparametern

37

Rendering der Fassung und des Kopfes

Interaktion des Benutzers mit dem Modell

38

Geste zur Navigation

39

Anpassung der Rotation der Fassung

Anpassung der Position auf dem Nasenrücken durch Benutzer

Anpassung der intrinsischen Fassungsparameter durch Benutzer

Verringerung der Zahl der freien Fassungsparameter

310

311

Ende: Endkontrolle und Übergabe an Bestellsystem

# Fig. 3

| Anpassung auf Basis von Anpassungsrichtlinien | 40 |

| Anpassung an Anatomie des Kopfes | 41 |

# Fig. 4

| 51 | | 52 |
| Fassungshersteller erstellt spezifische Anpassungsrichtlinien (zB xml-Datei) | Fassungshersteller erstellt parametrisches Fassungsmodell | 3D-Messsystem erstellt Kopfmodell |

50

3D-Kopf-Analysemodul erstellt 3D-Merkmale — 53

54 — Anpassung der Fassung nach spezifischen Richtlinien und Festlegung der Soll-Position und - Orientierung

55 — Anpassung der Fassung an anatomischen Gegebenheiten des Kopfes

Virtuelles Aufsetzen und Rendering — 56

Manuelle Anpassung von Fassungsparametern und der Positionierung — 57

# Fig. 5

58 — Übergabe an Bestellsystem

# Fig. 6

Fig. 7

## Fig. 8

## Fig. 9

Fig. 10

Bereitstellen eines parametrischen Kopfmodells mit Messpunkten  110

Anpassen des parametrischen Kopfmodells an 3D-Modell des Kopfes der Person  111

Übertragen der Messpunkte auf Basis des Anpassens  112

Fig. 11

120
Parametrisches Fassungsmodell mit freien Parametern für die anatomische Anpassung

121
Parametrisches Kopfmodell

122
3D-Modell des Kopfes der Person

124
Fit des parametrischen Kopfmodells an das 3D-Modell des Kopfes der Person

123
Bestimmung von Mess-Punkten auf dem parametrischen Kopfmodell

125
Übertragung der Messpunkte auf das gefittete Kopfmodell

126
Optional: Übertragung der Messpunkte auf das 3D-Modell des Kopfes der Person

127
Berechnen der Merkmale

128
Berechnen der Fassungsparameter

129
Anpassung des parametrierten Fassungsmodells

1210
Virtuelles Aufsetzen

1211
Optional: Optimierungsschritt: Feintuning der Fassung-Parameter an Hand des 3D-Modell des Kopfes der Person

1212
Auswahl weiterer Fassungsparameter und Übergabe an Bestellsystem

# Fig. 12

Fig. 13A

Fig. 13B

132

130

Fig. 13C

132'

131

Fig. 13D

Fig. 14

Fig. 15

Fig. 16

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030123026 A1
- US 2002015530 A1
- US 9286715 B2
- US 2005162419 A
- US 20150055085 A1
- DE 102016824 A1
- US 20150277155 A1
- US 20130088490 A1
- US 20150293382 A1

- US 20160327811 A1
- WO 2016164859 A1
- WO 2013177456 A1
- WO 0188654 A2
- EP 17173929 A
- EP 17153556 A
- EP 17153558 A
- EP 17153559 A


**In der Beschreibung aufgeführte Nicht-Patentliteratur**

- Virtual Try-On of Eyeglasses using 3D-Model of the Head. Institute for Infocomm Research, Dezember 2011
- **RAU J-Y ; YEH P-C.** A Semi-Automatic Image-Based Close Range 3D Modeling Pipeline Using a Multi-Camera Configuration. *Sensors,* 2012, vol. 12 (8), 11271-11293
- **M. NIEßNER ; M. ZOLLHÖFER ; S. IZADI ; M. STAMMINGER.** Real-time 3D reconstruction at scale using voxel hashing. *ACM Trans. Graph.,* November 2013, vol. 32, 6, https://doi.org/10.1145/2508363.2508374
- *Attribut (Objekt),* Juli 2017
- *Asymmetrisches Kryptosystem,* Juni 2017
- *Public-Key-Verschlüsselungsverfahren,* Juni 2017
- *Syntaxbaum,* Mai 2017
- *Optimierung*
- Methoden der lokalen nichtlinearen Optimierung mit Nebenbedingungen. Mai 2017
- *Verschlüsselungsverfahren,* Mai 2017
- **J. EBER.** Anatomische Brillenanpassung. Verlag Optische Fachveröffentlichung GmbH, 24 ff
- **H. HIRSCHMÜLLER.** Stereo Processing by Semi-global Matching and Mutual Information. *IEEE Transactions on Pattern Analysis and Machine Intelligence,* vol. 30 (2), 328-341
- **JOHANNES EBER.** Anatomische Brillenanpassung. Verlag Optische Fachveröffentlichung GmbH, 1987, 23ff

- **JOHANNES EBER.** Anatomische Brillenanpassung. Verlag Optische Fachveröffentlichung GmbH, 1987, 17ff
- **V. KAZEMI ; J. SULLIVAN.** One millisecond face alignment with an ensemble of regression trees. *Proceedings of the IEEE Conference on Computer Vision and Pattern Recognition,* 2014
- *Parser,* Mai 2017
- *Bewegung (Mathematik),* Mai 2017
- **A. BRUNTON ; A. SALAZAR ; T. BOLKART ; S. WUHRER.** Review of Statistical Shape Spaces for 3D Data with Comparative Analysis for Human Faces. *Computer Vision and Image Understanding,* 2014, vol. 128, 1-17
- **J. BOOTH ; A. ROUSSOS ; S. ZAFEIRIOU ; A. PONNIAH ; D. DUNAWAY.** A 3D Morphable Model learnt from 10,000 faces. *2016 IEEE Conference on Computer Vision and Patent Recognition (CVPR),* 2016, 5543-5552
- *Spline,* Mai 2017
- *bivariate polynomial,* Juni 2017, https://en.wikipedia.org/wiki/Polynomial#Definition
- **HARTLEY ; ZISSERMAN.** *Multiple View Geometry in Computer Vision,* 2000, 7
- **JOHANNES EBER.** Anatomische Brillenanpassung. Verlag Optische Fachveröffentlichung GmbH, 1987, 26